# FASCICULE DE BREVET EUROPEEN

(11) **EP 4 619 910 B1**
(45) Date de publication et mention de la délivrance du brevet: **07.10.2026**
(21) Numéro de dépôt: 23801802.2
(22) Date de dépôt: 10.11.2023
(51) Int. Cl.: G06Q 10/04, G06T 17/05, G06T 19/00, G06Q 50/08

(54) **METHODE D'ANALYSE DE DONNEES POUR QUANTIFIER UN POTENTIEL DE RAFRAICHISSEMENT D'UNE ZONE D'UN SITE GEOGRAPHIQUE**
VERFAHREN ZUR DATENANALYSE IM HINBLICK AUF DIE QUANTIFIZIERUNG EINES KÜHLPOTENZIALS EINER REGION EINES GEOGRAFISCHEN STANDORTS
METHOD FOR ANALYSING DATA WITH A VIEW TO QUANTIFYING A COOLING POTENTIAL OF A REGION OF A GEOGRAPHICAL SITE

(30) Priorité: 14.11.2022 FR 2211783
(43) Date de publication de la demande: 24.09.2025
(73) Titulaire: Centre National de la Recherche Scientifique, 75016 Paris (FR); Université Gustave Eiffel - ESIEE Paris, 93162 Noisy le Grand Cedex (FR); Université Paris Cité, 75006 Paris (FR); Ville de Paris, 75196 Paris RP (FR)
(72) Inventeur: HENDEL, Martin, 75014 PARIS (FR); PARISON, Sophie, 91200 ATHIS-MONS (FR); KARAM, Ghid, 92120 MONTROUGE (FR); ROYON, Laurent, 75006 PARIS (FR)
(74) Mandataire: Hautier IP
(86) Numéro de dépôt international: PCT/EP2023/081511
(87) Numéro de publication internationale: WO 2024/104924

(56) Documents cités:
- SUN YANWEI ET AL: "Assessing the cooling efficiency of urban parks using data envelopment analysis and remote sensing data", THEORETICAL AND APPLIED CLIMATOLOGY XX, XX, vol. 145, no. 3-4, 7 June 2021 (2021-06-07), pages 903 - 916, XP037518793, ISSN: 0177-798X, [retrieved on 20210607], DOI: 10.1007/S00704-021-03665-2
- PETRI AARON C ET AL: "Planning the urban forest: Adding microclimate simulation to the planner's toolkit", LAND USE POLICY, PERGAMON, AMSTERDAM, NL, vol. 88, 9 August 2019 (2019-08-09), XP085854225, ISSN: 0264-8377, [retrieved on 20190809], DOI: 10.1016/J.LANDUSEPOL.2019.104117
- DARDIR MOHAMED ET AL: "Development of microclimate modeling for enhancing neighborhood thermal performance through urban greenery cover", ENERGY, ELSEVIER, AMSTERDAM, NL, vol. 252, 2 September 2021 (2021-09-02), XP086833809, ISSN: 0378-7788, [retrieved on 20210902], DOI: 10.1016/J.ENBUILD.2021.111428
- ZHANG MUXING ET AL: "Urban micro-climate prediction through long short-term memory network with long-term monitoring for on-site building energy estimation", SUSTAINABLE CITIES AND SOCIETY, ELSEVIER, AMSTERDAM, NL, vol. 74, 3 August 2021 (2021-08-03), XP086776917, ISSN: 2210-6707, [retrieved on 20210803], DOI: 10.1016/J.SCS.2021.103227
- YANG F ET AL: "Summertime heat island intensities in three high-rise housing quarters in inner-city Shanghai China: Building layout, density and greenery", BUILDING AND ENVIRONMENT, PERGAMON PRESS, OXFORD, GB, vol. 45, no. 1, 1 January 2010 (2010-01-01), pages 115 - 134, XP026611433, ISSN: 0360-1323, [retrieved on 20090529], DOI: 10.1016/J.BUILDENV.2009.05.010
- WU ZHIFENG ET AL: "Evaluating Urban Geometry Impacts on Incident Solar Radiation on Building Envelopes", ENVIRONMENTAL MODELING AND ASSESSMENT, vol. 26, no. 1, 2 July 2020 (2020-07-02), pages 113 - 123, XP037357389, ISSN: 1420-2026, DOI: 10.1007/S10666-020-09707-9
- CHEN RUONING ET AL: "Reduction of urban heat island and associated greenhouse gas emissions", MITIGATION AND ADAPTATION STRATEGIES FOR GLOBAL CHANGE, SPRINGER NETHERLANDS, DORDRECHT, vol. 25, no. 4, 11 September 2019 (2019-09-11), pages 689 - 711, XP037208515, ISSN: 1381-2386, [retrieved on 20190911], DOI: 10.1007/S11027-019-09886-1
- PARK YUJIN ET AL: "Impacts of tree and building shades on the urban heat island: Combining remote sensing, 3D digital city and spatial regression approaches", COMPUTERS ENVIRONMENT AND URBAN SYSTEMS, NEW YORK, NY, US, vol. 88, 25 May 2021 (2021-05-25), XP086619520, ISSN: 0198-9715, [retrieved on 20210525], DOI: 10.1016/J.COMPENVURBSYS.2021.101655
- KOLOKOTRONI M ET AL: "Urban heat island intensity in London: An investigation of the impact of physical characteristics on changes in outdoor air temperature during summer", SOLAR ENERGY, ELSEVIER, AMSTERDAM, NL, vol. 82, no. 11, 1 November 2008 (2008-11-01), pages 986 - 998, XP025519667, ISSN: 0038-092X, [retrieved on 20080606], DOI: 10.1016/J.SOLENER.2008.05.004

## Description

### DOMAINE DE L'INVENTION

La présente invention concerne un outil d'aide à la visualisation et à la prise de décisions pour réaliser des travaux dans un site géographique extérieur.

L'outil permet de visualiser le site géographique et d'identifier les zones, dans le site, où il est recommandé de faire des travaux, les travaux ayant pour objectif d'aider au rafraichissement du site en cas de fortes températures, par exemple en cas de canicule.

L'invention a également pour objet de quantifier les effets des travaux réalisés, dans la zone du site géographique, afin de déterminer l'impact des travaux réalisés en cas de fortes chaleurs.

### ETAT DE LA TECHNIQUE

Les zones urbaines comportent de nombreuses infrastructures avec une forte densité de population. Ces zones possèdent un écosystème propre par la coexistence de bâtiments avec de la végétation ou des surfaces d'eau. La combinaison de ces paramètres engendre la formation d'un microclimat dans les zones urbaines et participe à la formation « d'îlot de chaleur urbain ». Ce phénomène est induit par la structure des villes, possédant de nombreuses surfaces imperméables qui réduisent la présence d'eau et de végétaux en ville, limitant d'office l'évapotranspiration et/ou l'évaporation ; et le ralentissement des vents par les bâtiments, ainsi que par la température de l'air ; l'ensemble de ces facteurs participent à la création de zones de chaleur locales.

Dans un contexte global de réchauffement climatique et des problématiques de la gestion de fortes températures dans les espaces urbains, de nombreuses interventions comportant des transformations urbaines sont effectuées, telles que la modification de la façade des bâtiments ou l'ajout de végétation dans les villes, pour contrer le phénomène « d'îlot de chaleur urbain » localement. En particulier, ces transformations dans la façade des bâtiments permettent de refroidir l'air et diminuer la température des zones de chaleur locales.

Ainsi, de nombreuses études se penchent sur des solutions technologiques pour faciliter la gestion de la chaleur urbaine, de sorte à comparer et/ou améliorer les performances des différentes techniques de refroidissement. Par exemple, le document Santamouris (Analyzing the heat island magnitude and characteristics in one hundred Asian and Australian cities and regions, Sci Total Environ, 2015 Apr 15 ; 512-513: 582-598. Doi: 10.1016/j.scitotenv.2015.01.060. Epub 2015 Jan 31) décrit des matériaux frais, lesquels comprennent notamment les matériaux réfléchissants, émissifs, perméables ou les matériaux à changement de phase (ou PCM, « Phase Change Materials » en anglais).

De même, la végétalisation urbaine a été largement étudiée et le document Bowler (A systematic review of evidence for the added benefits to health of exposure to natural environments, August 2010BMC Public Health 10(1):456, DOI:10.1186/1471-2458-10-456) décrit les avantages de la plantation d'arbres, du développement de façades ou de toits verts, de jardinières et de la végétalisation des pieds d'arbres ou de la création de parcs.

L'ensemble des travaux décrits mettent en avant des solutions technologiques permettant de limiter les effets négatifs de la chaleur urbaine. En revanche, les solutions décrites ne permettent pas l'élaboration d'une stratégie de rafraîchissement urbain sur leur territoire.

En effet, l'intégration des différentes solutions est difficile dans les analyses spatiales sans avoir recours à des simulations généralement lentes, lourdes et délicates, à la limite de l'expertise des opérationnels (et le temps de calcul est généralement incompatible avec le temps des projets réels). D'autre part, les outils de système d'information géographique (SIG) sont très courants dans les études urbaines, mais peu de travaux visent à combler le fossé entre la physique connue et ce type d'outil.

Pour apprécier l'impact de ces transformations, des systèmes d'observation de l'atmosphère sont développés servant à récupérer des informations quantitatives sur la zone altérée. Les données sont recueillies dans le but de confirmer l'efficacité des transformations et de pouvoir les améliorer. Ces systèmes d'observation doivent effectuer des hypothèses lors de l'acquisition des données pour pouvoir traiter l'ensemble des données sans s'éloigner de la réalité.

Par exemple dans l'article Yamagata et al. (Heat island mitigation using water retentive pavement sprinkled with reclaimed waste water, 2008, January, Water science and technology: a journal of the International Association on Water Pollution Research 57(5), 763-771), le système d'observation fonctionne avec l'hypothèse que deux points à proximité l'un de l'autre en milieu urbain présentent des conditions climatiques identiques, c'est-à-dire que le microclimat est uniforme en ville pour des stations météorologiques situées à proximité les unes des autres.

Le document Aaron C. Petri, Bev Wilson, Andrew Koeser, Planning the urban forest: Adding microclimate simulation to the planner's toolkit, Land Use Policy, Volume 88, 2019, 104117, ISSN 0264-8377, décrit l'impact d'arbres de rue sur une simulation de microclimat.

Mohamed Dardir, Umberto Berardi, Development of microclimate modeling for enhancing neighborhood thermal performance through urban greenery cover, Energy and Buildings, Volume 252, 2021, 111428, ISSN 0378-7788, discute l'impact d'infrastructures vertes, par exemple de canopée et de façade verte, sur le microclimat par un modèle.

Dans d'autres systèmes d'observations, l'hypothèse établit que les données recueillies avant et après la transformation sont indépendantes. En réalité, ces hypothèses ne sont pas valides en milieu urbain et les résultats, mesurant l'impact de ces transformations, ne sont pas représentatifs de la réalité, ainsi la quantification des effets des transformations n'est pas exacte.

### EXPOSE DE L'INVENTION

La présente invention se propose de résoudre ces problèmes techniques en fournissant aux acteurs des travaux en milieu urbain un outil permettant de visualiser le potentiel que possède chaque zone d'un site géographique donné pour subir des transformations permettant de rafraichir ladite zone, afin de prévenir les phénomènes d'îlots de chaleur urbains et d'apporter ainsi un confort thermique /rafraichissement aux personnes présentes sur la zone en cas de forte chaleur.

Pour ce faire, l'outil que propose l'invention met en oeuvre un procédé qui permet de représenter chaque zone du site géographique concerné d'une certaine façon, la façon de représenter les zones étant dépendante d'un coefficient calculé conformément à l'invention et qui indique le potentiel de rafraichissement de mailles élémentaires formant la zone géographique concernée.

Autrement dit, un premier but de l'invention est d'établir une image du site donné où chaque zone donnée est représentée de façon à visualiser les potentiels de rafraichissement qui ont été évalués pour chaque maille qu'elle comporte (la zone étant découpée en mailles élémentaires).

L'invention concerne, dans un premier temps, un procédé pour calculer un potentiel de rafraichissement d'une maille élémentaire d'un site géographique extérieur, ledit potentiel de rafraichissement visant à quantifier une performance de ladite maille située dans une zone soumise à un stress thermique source de formation d'un ilot de chaleur en cas de canicule. Le procédé conforme à l'invention est remarquable en ce qu'il comporte les étapes suivantes :
- on réalise un modèle numérique d'élévation du site,
- on réalise un découpage du site en mailles élémentaires,

en ce que, on collecte un premier ensemble d'informations comprenant :
   - une information de latitude du site,
   - une information d'ensoleillement estival de surface du site, ladite information d'ensoleillement estival de surface étant une valeur calculée notamment à partir de ladite information de latitude du site et du nombre de jours d'ensoleillement du site sur une période de temps donnée
   - une information de facteur de vue du ciel, correspondant à un nombre adimensionnel compris entre 0 et 1 qui représente l'exposition d'une surface à la voûte céleste, ladite information de facteur de vue du ciel étant obtenue par calcul numérique,
en ce que pour chaque maille on collecte :
   - une information d'albédo des surfaces minérales présentes dans ladite maille, ladite information d'albédo correspondant à un coefficient de réflexion du rayonnement solaire par des matériaux identifiés sur lesdites surfaces minérales présentes dans la maille, obtenu par mesure sur site ou en laboratoire
   - un coefficient représentant des émissions de chaleur anthropiques, ledit coefficient identifiant les points de rejet de chaleur anthropique dans ladite maille,
en ce que, on collecte un second, ou de façon équivalente un deuxième, jeu d'informations relatives à la présence de végétation dans la maille, à partir dudit modèle numérique d'élévation réalisé, ledit second jeu d'informations comprenant :
   - une première information (δ_{végétation basse}) de présence de végétation, relative à la présence d'une première couche de végétation qui s'étend en dessous d'une hauteur au-dessus d'un sol de ladite maille (m₁, mₙ),
   - une seconde information (δ_{végétation haute}) de présence de végétation, relative à la présence d'une seconde couche de végétation qui s'étend au-dessus de ladite hauteur du sol de ladite maille (m₁, mₙ),
   - une information d'irrigation (δ_{irrigation}), relative à l'irrigation des surfaces naturelles présentes sur ladite maille (m₁, mₙ),
en ce que l'on calcule un score de végétation (Score_{végétation}) à partir dudit second jeu d'informations comprenant les première et seconde informations de présence de végétation et ladite information d'irrigation, et
en ce que l'on calcule ledit potentiel de rafraichissement pour ladite maille avec la formule suivante : [Math 1] $Potentiel de rafra î chissement = \frac{\left(\left(1-{Score}_{v é g é tation}\right)+β\left(1-α.SVF\right)\right) . {I}_{cumul é} + {Q}_{F}}{{I}_{incident}}$
I_{incident} étant la densité de flux d'ensoleillement incidente horizontale sans obstacle et étant fourni par calcul numérique pour le site donné,
et où β est une valeur numérique comprise entre 0 et 1 permettant d'établir l'équivalence microclimatique entre la végétation et les matériaux urbains,
ledit potentiel de rafraîchissement calculé allant de 0 à 1, 0 caractérisant une maille offrant une performance de rafraichissement maximale avec des conditions bioclimatiques idéales tandis que 1 caractérise une maille n'offrant aucune performance de rafraîchissement.

Avantageusement, ledit score de végétation est calculé de la façon suivante : [Math 2] $\begin{matrix}{Score}_{v é g é tation} = \left(0,6+0,1.{δ}_{EP}+0.2.{δ}_{irrigation}\right) ⋅ {δ}_{v é g é tation haute} ⋅ \left(1-{δ}_{v é g é tation basse}\right) \\ + \left(0,2+0,1.{δ}_{EP}+0.2.{δ}_{irrigation}\right) ⋅ {δ}_{v é g é tation basse} ⋅ \left(1-{δ}_{v é g é tation haute}\right) \\ + \left(0,8+0,1.{δ}_{EP}+0.2.{δ}_{irrigation}\right) ⋅ {δ}_{v é g é tation basse} ⋅ {δ}_{v é g é tation haute}\end{matrix}$ où :
δ_{végétation basse} est une information de présence de végétation, relative à la présence d'une première couche de végétation qui s'étend en dessous d'une hauteur au-dessus d'un sol de ladite maille,
δ_{végétation haute} est une information de présence de végétation, relative à la présence d'une seconde couche de végétation qui s'étend au-dessus de ladite hauteur au- dessus du sol de ladite maille,
δ_{irrigation} est une information d'irrigation, relative à l'irrigation des surfaces naturelles présentes sur la maille,
δ_{végétation basse} étant égale à 1 lorsque le sol est couvert de végétation basse, sinon 0 ;
δ_{végétation haute} étant égale à 1 lorsque le sol est couvert de végétation haute, sinon 0 ;
δ_{EP} étant égale à 1 lorsque la végétation de la maille élémentaire (m₁, mₙ) à un accès à de l'eau pluviale des toitures ou des surfaces environnantes en plus de la pluie standard ; et
δ_{irrigation} étant égale à 1 lorsque la végétation de la maille élémentaire à un accès continu à l'eau au cours de l'été, soit par de l'irrigation active, soit par un système de réservoir d'eau ou autre conception intégrée permettant d'assurer cet accès continu à l'eau pour les plantes.

De préférence encore, suivant le procédé conforme à l'invention, on collecte un troisième jeu d'informations parmi lesquelles :
- une information de bâtiments, prenant en considération le nombre de bâtiments présents sur la zone du site comprenant ladite maille, ainsi que la surface au sol occupée par ledit nombre de bâtiments, et éventuellement
- une information de climatiseur, indiquant la présence ou l'absence de climatiseurs équipant ledit nombre de bâtiments, et éventuellement,
- une information d'infrastructure souterraine, indiquant la présence ou l'absence d'infrastructures souterraines si ladite infrastructure souterraine est susceptible de dégager de la chaleur à la surface,
- ledit troisième jeu d'informations indiquant la puissance thermique dégagée.

En outre, ladite information d'ensoleillement estival de surface et/ ou ladite information de la densité de flux d'ensoleillement incidente, correspond à une valeur d'ensoleillement cumulée du lever du soleil au coucher du soleil sur une journée, ou correspond à une valeur d'ensoleillement moyenne pondérée d'ensoleillement du lever au coucher du soleil qui est calculée à partir de trois journées d'ensoleillement, de préférence ladite ou lesdites journées étant sélectionnées entre le 15 juin et le 15 septembre.

L'invention concerne également un procéder pour délivrer une représentation visuelle d'un un site géographique, ladite représentation visuelle permettant d'identifier visuellement des zones géographiques dudit site susceptibles de nécessiter des travaux, ledit procédé pour délivrer une représentation visuelle étant remarquable en ce qu'il comporte les étapes suivantes :
- réalisation d'un modèle dudit site géographique, et découpage dudit modèle en mailles de modèle, chaque maille de modèle correspondant à une représentation de l'une desdites mailles dudit site géographique,
- pour chaque maille, correspondant à chaque maille de modèle, on calcule le potentiel de rafraichissement conformément au procédé,
- on associe le potentiel de rafraichissement calculé pour chaque maille à chaque maille de modèle,

en ce que l'on associe, à chaque potentiel de rafraichissement ou à une fourchette de potentiels de rafraichissement une caractéristique de représentation visuelle,
et en ce que l'on représente chaque maille de modèle avec ladite caractéristique de représentation visuelle associée au potentiel de rafraichissement ou à une fourchette de potentiels de rafraichissement calculé pour ladite maille, de façon à obtenir une représentation visuelle du site géographique extérieur avec des mailles de site géographique visuellement identifiées avec la représentation visuelle attribué au potentiel de rafraichissement calculé pour chaque maille de site géographique.

L'invention concerne également une méthode pour quantifier un impact microclimatique de travaux sur une zone d'un site géographique extérieur, ledit site comprenant plusieurs zones géographiques adjacentes les unes aux autres, les travaux étant de nature à modifier un potentiel de rafraichissement d'une zone géographique dudit site. La méthode pour quantifier un impact microclimatique conforme à l'invention est remarquable en ce qu'elle comporte les étapes suivantes :
- avant réalisation de travaux sur la zone dudit site, on réalise une représentation visuelle du site conformément au procédé tel que défini ci-avant, pour identifier visuellement au moins un ensemble de mailles d'une zone du site associées à un potentiel de rafraîchissement global le plus élevé parmi lesdites mailles desdites zones du site,
- on positionne une première station météo d'étude dans ladite zone identifiée dans le site,
- on positionne une seconde station météo d'étude dans une seconde zone dudit site, de préférence ladite station météo de ladite seconde zone dudit site étant distante de moins de 1 km (ou de moins de sensiblement 1km) de ladite première station météo de la zone identifiée, et/ou un potentiel de rafraichissement globale de ladite seconde zone dudit site ayant tout au plus un écart de valeur de 15% avec un potentiel de rafraichissement global de la zone dans laquelle est positionnée ladite première station météo,

et en ce que ladite méthode comporte les étapes suivantes :
   - obtention d'un premier ensemble de données M_{étude, avant} pour la première station météo et d'un second ensemble de données M_{témoin, avant} pour la seconde station météo, avant la réalisation des travaux,
   - obtention d'un troisième ensemble de données M_{étude, après} pour la première station météo et d'un quatrième ensemble de données M_{témoin, après} pour la seconde station météo, après la réalisation des travaux,
   - calcul d'un cinquième ensemble de données ΔMₐᵥₐₙₜ et d'un sixième ensemble de données ΔM_{après} à partir des premiers, second, troisième et quatrième ensembles de données par la formule suivante : [Math 3] ${ΔM}_{t} = {M}_{é tude , t} - {M}_{t é moin , t}$
« t » prenant la valeur « avant » intervention ou « après » intervention,
et, quantification de l'impact microclimatique des travaux sur ladite zone du site extérieur donné par la formule suivante : [Math 4] $I = {ΔM}_{apr è s} - {ΔM}_{avant} .$

De préférence, les ensembles de données M_{étude, avant}, M_{témoin, avant}, M_{étude, après}, et M_{témoin, après} obtenues par les première et seconde stations météo comprennent la température de l'air, l'humidité relative, la température moyenne radiante, la vitesse du vent et l'indice universel du climat thermique.

En outre, les ensembles de données M_{étude, avant}, M_{témoin, avant}, M_{étude, après}, et M_{témoin, après} obtenues par les première et seconde stations météo peuvent être collectées à intervalles réguliers, sur une période de 24 heures, et en ce que, si au moins 80% des données de vitesse du vent sont inférieures ou égales à 4 m. s-1, ou de préférence inférieures ou égales à 3 m.s-1, alors l'ensemble des données M_{étude, avant}, M_{témoin, avant}, M_{étude, après}, et M_{témoin, après} sont conservées et enregistrées.

Avantageusement, les ensembles de données M_{étude, avant}, M_{témoin, avant}, M_{étude, après}, et M_{témoin, après} obtenues par les première et seconde stations météo sont collectées à intervalles réguliers, sur une période de 24 heures et, si au moins 70% des données de nébulosité sont inférieures ou égales à 3 Octas, alors l'ensemble des données M_{étude, avant}, M_{témoin, avant}, M_{étude, après}, et M_{témoin, après} sont conservées et enregistrées.

En outre encore, l'ensemble des données peut être relevé à intervalles réguliers au moins toutes les heures, de préférence au moins toutes les dix minutes, et de préférence encore entre 1 et 10 minutes.

De préférence, on réalise un lissage des données des ensembles de données M_{étude, avant}, M_{témoin, avant}, M_{étude, après}, et M_{témoin, après} collectées en réalisant une moyenne glissante des données brutes.

Suivant un mode de réalisation qui sera présenté par la suite, après obtention des premières second, troisième et quatrième ensemble de données, on réalise un prétraitement des données, ledit prétraitement consistant à supprimer les données erronées et consistant à ajouter des données supplémentaires dans l'ensemble de données obtenues si l'on constate une donnée manquante.

Avantageusement, la méthode comporte une étape finale de vérification des données, suivant laquelle on réalise un modèle linéaire à effet fixe avec un indicateur δ_{après} de l'état post-intervention, ladite étape finale comprenant le calcul suivant : [Math 5] ${ΔM}_{t} = {ΔM}_{avant} + I . {δ}_{apr è s} ,$ si t=après alors δ_{après}=1, si t=avant alors δ_{après}=0.

Ladite étape finale de vérification des données peut consister à réaliser un modèle linéaire à effets mixtes, le modèle combinant:
- ledit modèle linéaire à effet fixe, qui modélise l'impact microclimatique de l'intervention et
- des effets aléatoires qui modélisent des paramètres externes (P).

Enfin, les paramètres externes P, sont isolés, l'étape finale comprenant le calcul suivant : [Math 6] ${ΔM}_{t} = \left({ΔM}_{avant}+{\sum }_{i} {P}_{i , avant}\right) + \left(I+{\sum }_{i} {P}_{i , apr è s}\right) {δ}_{apr è s}$

« i » étant une variable égale aux nombres de paramètres externes.

### DESCRIPTION DES FIGURES

D'autres objectifs, caractéristiques et avantages sortiront de la description détaillée qui suit en référence aux dessins donnés à titre illustratif et non limitatif parmi lesquels :
La figure 1 est une figure qui représente une modélisation 2D d'un site urbain avec de jeunes arbres en fonction du potentiel de rafraichissement pour chaque maille élémentaire ;
La figure 2 est une figure qui représente une modélisation 2D du site urbain montré en figure 1 avec de grands arbres en fonction du potentiel de rafraichissement pour chaque maille élémentaire ;
La figure 3 est une figure qui représente une modélisation 2D du site urbain montré en figure 1 avec de jeunes arbres et des structures pare-soleils en fonction du potentiel de rafraichissement pour chaque maille élémentaire ;
La figure 4 est encore une figure qui représente une modélisation 2D du site urbain montré en figure 1 avec de grands arbres et des structures pare-soleils en fonction du potentiel de rafraichissement pour chaque maille élémentaire ;
La figure 5 est une représentation schématique en perspective d'un site, avant travaux, dans lequel une zone géographique est repérée en traits pointillés,
La figure 6 est une représentation schématique en perspective du site montré en figure 5, après avoir réalisé des travaux dans la zone géographique repérée en pointillés,
La figure 7 est un schéma fonctionnel illustrant les étapes d'une méthode conforme à l'invention, pour quantifier un impact microclimatique de travaux réalisés sur une zone d'un site géographique extérieur, et
La figure 8 illustre de façon schématique, plus détaillée, les sous-étapes d'une étape de la méthode (étape schématisée par le rectangle VIII) repéré par des traits pointillés sur la figure 7.

### DESCRIPTION DETAILLEE D'UN MODE DE REALISATION DE L'INVENTION

Comme indiqué ci-avant, l'un des objectifs de l'invention est de fournir, aux concepteurs urbains, un outil qui permet d'identifier visuellement les zones d'un site qui ont besoin ou non de travaux de rafraichissement urbain.

Un autre objectif de l'invention est de permettre de quantifier (ou de constater avec des données chiffrées), les effets des travaux réalisés dans certaines zones du site, de façon à déterminer, de façon objective, si les travaux réalisés ont eu un impact, ou non, dans la zone dans laquelle ils ont été fait.

Dans la présente description, on va d'abord s'intéresser à la conception de l'outil et au procédé conforme à l'invention que l'outil met en oeuvre, pour permettre d'identifier visuellement sur un site extérieur les zones nécessitant des travaux permettant d'éviter ou de réduire les ilots de chaleur urbaine.

Puis, dans un second temps, nous nous intéresserons aux moyens conformes à l'invention, et à la méthode conforme à l'invention, qui permettent de quantifier les impacts des travaux réalisés.

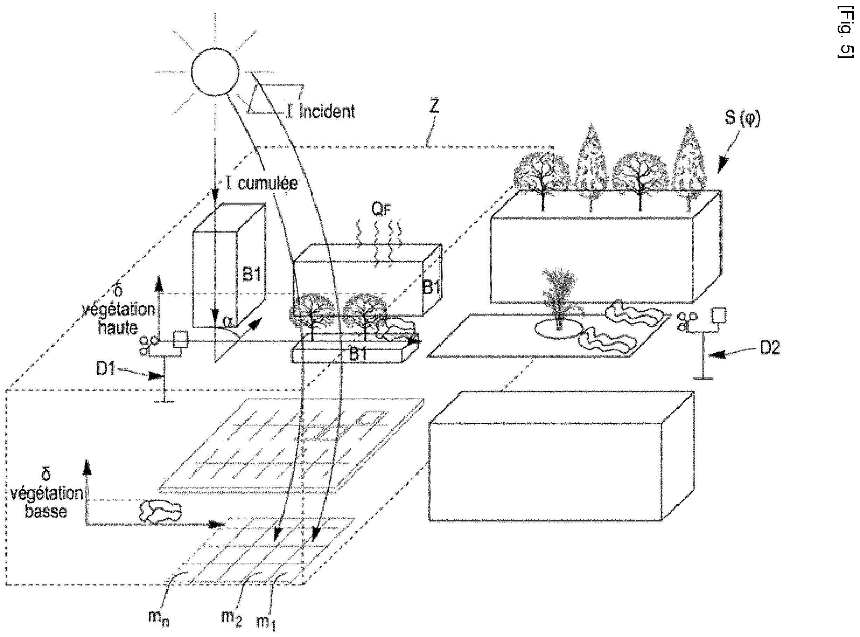

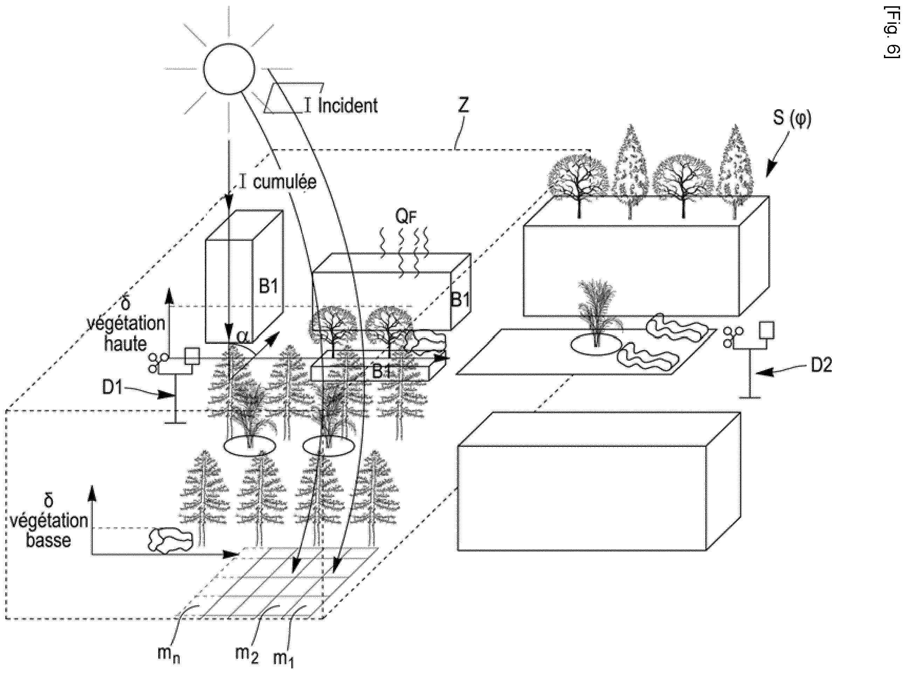

Pour réaliser l'outil permettant d'identifier visuellement les zones nécessitant des travaux, l'invention propose un procédé qui va prendre en considération des indicateurs qui sont propres à chaque maille de chaque zone du site concerné (les zones du site, ou le site en entier étant découpé en mailles élémentaires, voir en particulier les figures 5 et 6 où sont illustrées les mailles m₁ à mₙ de façon schématique) pour évaluer un potentiel de

rafraîchissement de chaque maille pour des conditions météorologiques chaudes, par exemple en cas de canicule.

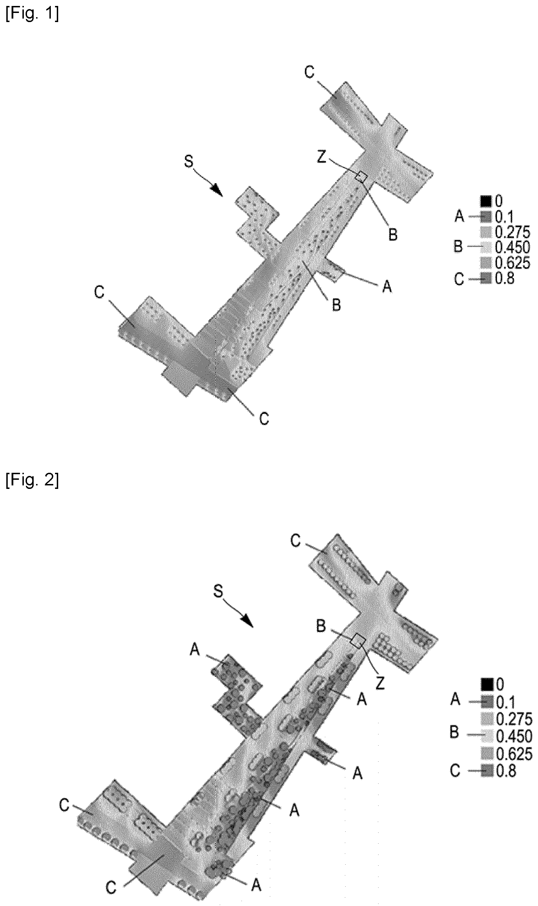

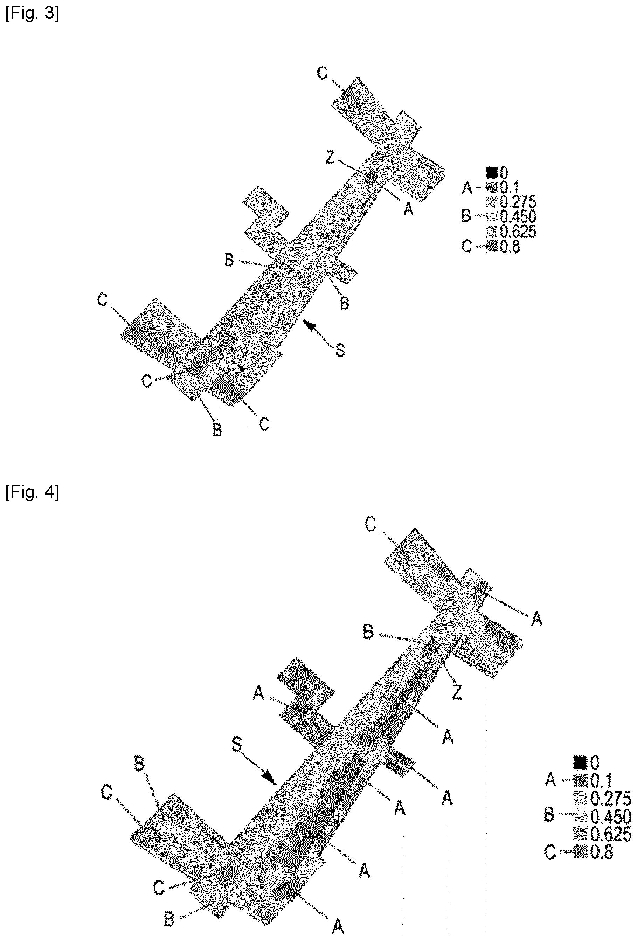

Les figures 1 à 4 illustrent des exemples d'images que l'on peut obtenir avec l'outil mettant en oeuvre le procédé conforme à l'invention.

On note que chaque image montrée en figures 1 à 4 représente le même site S, avec des zones Z illustrées en dégradés de gris plus ou moins foncé.

L'intensité du dégradé de gris correspond à l'échelle indiquée sur chacune des figures, présentant six intensités de gris, chaque intensité de gris correspondant à un coefficient de 0 ; 0,1 ; 0,275 ; 0,450 ; 0,625 ; et 0,8.

Un potentiel de rafraichissement de 0,1 est repéré par la référence A qui est indiquée sur les figures.

Le potentiel de rafraichissement de 0,450 est repéré par la référence B qui est indiquée sur les figures.

Le potentiel de rafraichissement de 0,8 est repéré par la référence C qui est indiquée sur les figures.

Le potentiel de rafraichissement 0 caractérise une espace offrant une performance rafraichissante maximale, tandis que le coefficient de 1 caractérise une espace n'offrant aucune performance rafraichissante.

Ainsi, dans le cadre de l'exemple illustré, les mailles mₙ repérées dans l'image par la nuance de gris portant la référence C correspond à une maille qui présente la plus mauvaise performance rafraichissante tandis que les mailles mₙ repérées dans l'image par la nuance de gros portant la référence A ont la meilleure performance rafraichissante.

Les mailles des zones repérées par la nuance de gris portant la référence B ont une performance rafraichissante moyenne, moins bonne que celles repérées par la nuance de gris de la référence A.

Le potentiel de rafraichissement donne une indication à la fois :
sur le niveau de stress thermique offert par le site à un piéton, c'est-à-dire qu'il révèle un espace où les conditions thermiques atteignent des valeurs considérées comme inconfortables, voire dangereuses, pour l'homme
sur le fait qu'une zone puisse faire l'objet d'améliorations rafraîchissantes permettant de réduire ce potentiel.

Il va maintenant être fait référence au procédé conforme à l'invention, qui permet d'obtenir de telles images :
Selon un premier aspect de l'invention, on cherche à représenter le site S pour visualiser des zones (Z) du site où le potentiel de rafraichissement est le plus haut (c'est-à-dire des zones où il serait opportun de réaliser des travaux pour éviter les ilots de chaleurs en cas de canicule).

On considère que le site géographique concerné S est formé par plusieurs zones adjacentes les unes aux autres : chaque représentation visuelle de zone sur la représentation visuelle globale du site va correspondre à une zone géographique dudit site géographique.

Le procédé comporte ainsi une étape de modélisation dudit site géographique pour obtenir une sorte de cartographie du site S : par exemple, une image de dessus dudit site géographique peut être obtenue. L'image est alors découpée en zones d'image, chaque zone d'image correspondant à une représentation de dessus de ladite zone géographique dudit site.

Il devra être compris que l'invention ne se limite pas à la délivrance d'une image : toute représentation visuelle serait conforme à l'invention, pourvu que la représentation visuelle du site S comporte des zones qui sont représentés avec des caractéristiques propres à identifier les zones à fort potentiel de rafraîchissement (c'est-à-dire les zones comportant le plus de mailles dont le potentiel de rafraichissement est plus proche de 100% que de 0%).

L'étape de modélisation peut être réalisée par tout moyen connu de l'homme du métier, par exemple en utilisant une topographie (modèle numérique du terrain, du site).

Chaque zone d'image Z et plus globalement le site S dans son entier est donc découpé en mailles élémentaires et on calcule, pour chaque maille élémentaire le potentiel de rafraichissement conformément au procédé qui sera exposé ci-après.

On associe à chaque potentiel de rafraichissement, ou à une fourchette de valeurs de potentiels de rafraichissement, une caractéristique de représentation visuelle : sur les figures 1 à 4, il s'agit d'un dégradé de couleurs ou de de gris, comme indiqué précédemment.

Il devra être compris que la représentation associée à chaque potentiel de rafraichissement ou à chaque fourchette de potentiel de rafraichissement pourrait être différents sans sortir du cadre de l'invention (couleur, représentation avec des rayures ou des points etc.).

La procédé prévoit ainsi de réaliser une représentation visuelle (par exemple une image sur un écran, 2D, 3D) où chaque zone du site géographique associée à la zone Z sur la représentation visuelle est représentée visuellement en fonction du potentiel de rafraichissement calculé pour chacune des mailles qu'il comporte, de sorte à obtenir ladite représentation visuelle du site géographique extérieur avec des zones de site géographique

visuellement identifiée en fonction du potentiel de rafraichissement des mailles qu'elles comportent.

Le potentiel de rafraichissement est obtenu de la façon suivante :
On réalise un modèle numérique d'élévation des zones Z du site S, comme représenté par exemple en figure 5.

On réalise également un maillage de l'ensemble du site, c'est-à-dire que le site est décomposé (ou pavé) en mailles élémentaires m₁, m₂, m₃... mₙ, formant un réseau.

Avantageusement, on peut choisir la taille des mailles élémentaires en fonction de la taille du site S et/ou de la résolution spatiale souhaitée.

De préférence, on prévoit que la taille des mailles élémentaires soit définie par rapport à la taille d'un piéton : soit une maille de l'ordre du mètre (0,5 m typiquement).

Le motif de la maille mₙ peut être une forme géométrique de telle sorte que le pavage recouvre l'intégralité de la surface du site S, sans recouvrement entre deux motifs élémentaires contigus mₙ et mₙ₊₁(voir figures 5 et 6 par exemple, m₁ et m₂).

On collecte alors un premier ensemble d'informations comprenant :
- une information de latitude φ du site S,
- une information d'ensoleillement estival de surface I_{cumulée} du site, ladite information d'ensoleillement estival de surface I_{cumulée} étant une valeur calculée notamment à partir de ladite information de latitude φ de du site et du nombre de jours d'ensoleillement du site sur une période de temps donnée, ladite information d'ensoleillement estival de surface (I_{cumulée}) étant notamment calculée à partir de données fournies par au moins une station météo D1 (ou D2) située sur le site géographique S.

Plus précisément, l'information d'ensoleillement estival de surface I_{cumulée} est calculée à partir de la latitude et de la morphologie du site, par une moyenne pondérée sur plusieurs jours d'ensoleillement.

Le calcul de l'ensoleillement à partir d'une moyenne pondérée permet d'avoir une valeur moyenne d'ensoleillement pour l'été ou pour toute période sur l'année jugée pertinente pour l'analyse du potentiel de rafraîchissement.

De préférence, l'information d'ensoleillement estival de surface I_{cumulée} se base sur une moyenne pondérée d'au moins 1 jour d'ensoleillement, avantageusement au moins 3 jours, avantageusement au moins 5 jours, avantageusement au moins 10 jours, avantageusement jusqu'à 100 jours.

De façon avantageuse, le calcul de l'ensoleillement se fait sur la base d'une moyenne pondérée de 11j, de 12j, de 13j, de 14j, de 15j, de 16j, de 17j, de 18j, de 19j, de 20j, de 21j, de 22j, de 23j, de 24j, de 25j, de 26j, de 27j, de 28j, de 29j, de 30j, de 31j, de 32j, de 33j, de 34j, de 35j, de 36j, de 37j, de 38j, de 39j, de 40j, de 41j, de 42j, de 43j, de 44j, de 45j, de 46j, de 47j, de 48j, de 49j, de 50j, de 51j, de 52j, de 53j, de 54j, de 55j, de 56j, de 57j, de 58j, de 59j, de 60j, de 61j, de 62j, de 63j, de 64j, de 65j, de 66j, de 67j, de 68j, de 69j, de 70j, de 71j, de 72j, de 73j, de 74j, de 75j, de 76j, de 77j, de 78j, de 79j, de 80j, de 81j, de 82j, de 83j, de 84j, de 85j, de 86j, de 87j, de 88j, de 89j, de 90j, de 91j, de 92j, de 93j, de 94j, de 95j, de 96j, de 97j, de 98j ou de 99j.

Par exemple, l'ensoleillement global doit être représentatif d'une journée de ciel clair (sans nuages) pour la période s'étendant du 15 juin au 15 septembre.

Par défaut, une moyenne pondérée est calculée à partir de trois journées, par exemple avec la pondération indiquée entre parenthèses pour chacune d'entre elles : 17/07 (52 jours), 17/08 (21 jours) et 06/09 (19 jours). C'est-à-dire que sur la période du 15 juin au 15 septembre, il y a eu 52 jours avec la même quantité d'ensoleillement que le 17 juillet de cette année, il y a eu 21 jours avec la même quantité d'ensoleillement que le 17 août de cette année et il y a eu 19 jours avec la même quantité d'ensoleillement que le 6 septembre de cette année, donnant la formule suivante : [Math 7] ${I}_{cumul é} = \frac{52 . {I}_{17 juillet} + 21 . {I}_{17 août} + 19 . {I}_{6 septembre}}{92}$

Avantageusement, la simulation de l'ensoleillement est à adapter en fonction de la période d'intérêt.

Par défaut, l'étude est réalisée sur une journée entière, en fonction de la fréquentation du site, avantageusement des périodes plus restreintes d'une journée pourront être utilisées.

Par exemple, un espace laissé vacant le soir ou en fin d'après-midi bénéficierait d'un réajustement de la période d'étude à la plage horaire 6h-14h. Il s'agit de calculer l'ensoleillement cumulé, du lever du soleil jusqu'à la fin de la période d'utilisation ou jusqu'au coucher du soleil.

Pour calculer le potentiel de rafraichissement d'une maille de la zone Z, d'autres informations sont également collectées, et en particulier :
- une information d'albédo des surfaces minérales (α) présentes dans ladite maille, ladite information d'albédo (α) correspondant à un coefficient de réflexion du rayonnement solaire par des matériaux identifiés sur lesdites surfaces minérales présentes dans la maille,
- une information de facteur de vue du ciel (SVF),
- un coefficient (QF) représentant des émissions de chaleur anthropiques, ledit coefficient (QF) identifiant les points de rejet de chaleur anthropique dans ladite maille.

On comprendra par « Albédo des surfaces minérales (α) » le coefficient de réflexion du rayonnement solaire d'une surface, tel que mesuré par les normes en vigueur (telles que ASTM E1918-16 ou ASTM E903-12). Avantageusement, l'albédo est à renseigner à partir de la connaissance des matériaux du site étudié. Il permet de calculer l'énergie solaire absorbée par les surfaces ensoleillées. Si l'albédo réel des matériaux prévus n'est pas connu, une valeur tirée de la bibliographie pourra être utilisée, à condition de réaliser une étude de sensibilité à ce paramètre.

Au sens de l'invention, une étude de sensibilité est une étude visant à quantifier l'importance de l'erreur pouvant être induite par un mauvais paramétrage.

Autrement dit, à quel point les résultats sont modifiés si l'on change le paramètre dont on cherche à déterminer la sensibilité (albédo dans le cas présent).

On comprendra par « facteur vue du ciel » un nombre adimensionnel compris entre 0 et 1 qui représente l'exposition d'une surface à la voûte céleste.

Ce paramètre est important pour qualifier l'adéquation de solutions réfléchissantes ou émissives, c'est-à-dire l'emploi de surface ou de traitements à albédo ou émissivité plus élevés que la surface de référence, initialement envisagée. En effet, ces solutions n'apportent de bénéfice qu'à condition que le rayonnement réfléchi ou émis parvienne à atteindre le ciel, plutôt que les bâtiments environnants par exemple.

On comprendra par « Coefficient (QF) » un coefficient qui qualifie les rejets de chaleur anthropique (QF) : La méthode selon l'invention permet d'identifier les points de rejet de chaleur anthropique au niveau des espaces fréquentés par les usagers, par exemple les climatiseurs. Cela comprend également, le cas échéant, la présence d'infrastructures souterraines susceptibles de rejeter de la chaleur en surface (par exemple : réseau de chaleur, bouches d'aération au sol, ...).

Les mesures d'efficacité énergétique sont également importantes, notamment celles qui visent à limiter l'impact de la climatisation. En effet, en plus d'émettre sous forme de chaleur l'équivalent de leur consommation électrique, les climatiseurs rejettent à l'extérieur la chaleur qu'ils extraient du local climatisé. Le ratio entre chaleur rejetée et électricité consommée est ainsi supérieure à 1 et vaut généralement autour de 3. Plus l'usage de la climatisation est limité, plus ces rejets importants sont réduits.

Conformément à l'invention, pour calculer le potentiel de rafraichissement de la zone Z, on collecte également un second jeu d'informations relatives à la présence de végétation dans la zone, à partir dudit modèle numérique d'élévation réalisé.

En effet, le modèle numérique d'élévation réalisé doit être construit à partir d'un modèle numérique de terrain (topographie) couplé à un modèle d'élévation du bâti et de

hauteur de végétation permettant de tenir compte des buissons et arbres projetant de l'ombre (voir en particulier les figures 5 et 6 illustrant de façon schématique la végétation et sa hauteur).

Le second jeu d'informations comprend alors :
- une première information (δ_{végétation basse})de présence de végétation, relative à la présence d'une première couche de végétation qui s'étend en dessous d'une hauteur au-dessus d'un sol de la maille mₙ (n étant la référence de la maille concernée),
- une seconde information (δ_{végétation haute})de présence de végétation, relative à la présence d'une seconde couche de végétation qui s'étend au-dessus de ladite hauteur du sol de la maille mₙ,
- une information d'irrigation (δ_{irrigation}), relative à l'irrigation des surfaces naturelles présentes sur la maille mₙ,
et on calcule un score de végétation (Score_{végétation}) à partir dudit second jeu d'informations comprenant les première et seconde informations de présence de végétation et ladite information d'irrigation.

δ_{vég} est une valeur numérique égale à 1 en présence de végétation ; β est une valeur numérique comprise entre 0 et 1 permettant d'établir l'équivalence microclimatique entre la végétation et les matériaux urbains.

Avantageusement, δ_{vég} est égale à la somme de δ_{végétation basse} et de δ_{végétation haute}.7

Avantageusement, β est un facteur qui vaut 0,4.

La végétation des surfaces non minéralisées est à distinguer entre strate haute (arborée) et strates basses (herbacée et arbustive). Cela permet de préciser la superposition ou non de couches végétales herbacées et/ou arborées. La combinaison de deux strates maximise l'effet rafraîchissant. Une modulation du score de végétation ( 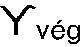 ) permet de tenir compte de l'irrigation estivale des végétaux ou de l'apport d'une conception qui valorise les eaux pluviales (EP), par exemple par alimentation des espaces végétalisés.

Avantageusement, le score de végétation( 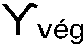 ) suit la formule suivante : [Math 8] 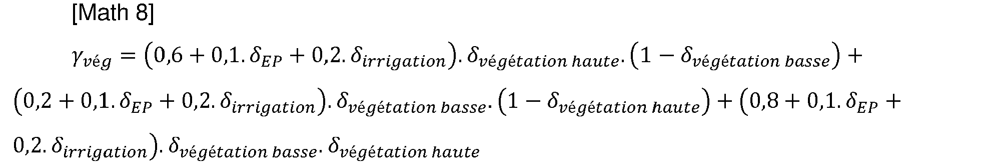 γvég = (0,6 + 0,1. δEP + 0,2. δirrigation). δvégétation haute. (1 - δvégétation basse) + (0,2 + 0,1. δEP + 0,2. δirrigation). δvégétation basse. (1 - δvégétation haute) + (0,8 + 0,1. δEP + 0,2. δirrigation). δvégétation basse. δvégétation haute
δ_{végétation basse} étant égale à 1 lorsque le sol est couvert de végétation basse, sinon 0 ;
δ_{végétation haute} étant égale à 1 lorsque le sol est couvert de végétation haute, sinon 0 ;
δ_{EP} étant égale à 1 lorsque la végétation de la maille élémentaire à un accès à de l'eau pluviale des toitures ou des surfaces environnantes en plus de la pluie standard ;
δ_{irrigation} étant égale à 1 lorsque la végétation de la maille élémentaire à un accès continu à l'eau au cours de l'été, soit par de l'irrigation active, soit par un système de réservoir d'eau ou autre conception intégrée permettant d'assurer cet accès continu à l'eau pour les plantes.

Avantageusement, δ_{EP} et δ_{irrigation} ne peuvent pas valoir 1 en même temps.

Dans un second aspect de l'invention, le score de végétation ( 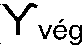 ) suit la formule suivante : [Math 9] ${γ}_{v é g} = \left({X}_{v é g}+0,1.{δ}_{EP}+0,2. {δ}_{irrigation}\right)$
X_{vég} étant égale à 0,2 lorsque le sol est couvert de végétation basse, égale à 0,6 lorsque le sol est couvert de végétation haute, ou égale à 0,8 lorsque le sol est couvert de végétation basse et de végétation haute ;
δ_{EP} étant égale à 0 lorsque le sol n'a pas d'apport d'eau, égale à 1 lorsque la végétation de la maille élémentaire à un accès à de l'eau pluviale des toitures ou des surfaces environnantes en plus de la pluie standard, ou égale à 2 lorsque la végétation de la maille élémentaire à un accès continu à l'eau au cours de l'été, soit par de l'irrigation active, soit par un système de réservoir d'eau ou autre conception intégrée permettant d'assurer cet accès continu à l'eau pour les plantes.

Une fois toutes ces données collectées, on peut calculer le potentiel de rafraichissement pour ladite zone avec la formule suivante : [Math 10] $Potentiel de rafra î chissement = \frac{\left(\left(1-{Score}_{v é g é tation}\right)+β\left(1-α.SVF\right)\right) . {I}_{cumul é} + {Q}_{F}}{{I}_{incident}}$

I_{incident} étant la densité de flux d'ensoleillement incidente horizontale sans obstacle et étant fourni par calcul numérique ou à partir de données de stations météos.

Par la suite, on comprendra par « densité de flux absorbée » l'éclairement reçu par la zone du site géographique concerné.

La densité de flux incidente horizontale sans obstacle, signifie que la densité de flux incidente horizontale est prise en compte sans la présence de masque.

Ainsi calculé, le potentiel de rafraichissement est calculé et va de 0 à 1,

0 caractérisant une maille offrant une performance de rafraichissement maximale avec des conditions bioclimatiques idéales, tandis que 1 caractérisant une maille n'offrant aucune performance de rafraîchissement.

Suite à la méthode d'analyse, une représentation 2D (voire 2,5D ou 3D) du site est possible, sur cette représentation des indicateurs permettent d'échelonner les valeurs de potentiel de rafraichissement, comme illustré sur les figures 1 à 4.

Le potentiel de rafraichissement peut définir un stress thermique ou un coefficient d'amélioration du site.

Une fois que chaque maille de chaque zone s'est vu attribuer un potentiel de rafraichissement, il est visuellement facile de choisir une zone du site pour réaliser des travaux.

Comme on peut le voir, la méthode selon l'invention permet de définir un potentiel de rafraichissement sur la base de données indépendantes de paramètres dont la variation dans le temps est forte et entrainant par conséquent un biais dans l'analyse de la chaleur quotidienne d'un site donné. Et avantageusement, le vent et la température du site n'influencent pas le calcul du potentiel de rafraichissement.

La méthode de calculs et les paramètres pris en compte dans la formule selon l'invention présentent l'avantage d'être facilement accessibles aux collectivités facilitant ainsi les prises de décisions associées à l'urbanisation ou la conception des espaces urbains, notamment en matière de rafraîchissement. Un outil d'aide à la prise de décision, mettant en oeuvre le procédé conforme à l'invention, permet également l'aménagement des territoires de sorte à aménager des espaces rafraichissants dans les pays à fort ensoleillement et/ou à fortes chaleurs.

L'indicateur « potentiel de rafraîchissement » permet de caractériser un espace extérieur du point de vue du potentiel d'amélioration du stress thermique qu'il génère pour un usager en cas de vague de chaleur. L'indicateur permet de quantifier une valeur qui n'est pas mesurée par des appareils usuels.

Le potentiel de rafraichissement est conçu pour deux utilisations principales :
aide à la conception d'une part, à destination des concepteurs (architectes/urbanistes) d'espaces extérieurs pour les aider à identifier les zones d'un projet avec le plus grand potentiel d'amélioration et à choisir les techniques rafraîchissantes les plus adaptées à leur projet ; et
aide à décision d'autre part, à destination des gestionnaires d'espaces extérieurs urbains pour les aider à identifier les espaces les plus défavorables au stress thermique des usagers ou les plus prioritaires pour un traitement rafraîchissant sur leur territoire.

Le potentiel de rafraîchissement est calculé à partir des caractéristiques matérielles et morphologiques générales du site étudié. Cela permet des calculs simplifiés et avec une meilleure efficacité d'analyse, contrairement aux outils multiphysiques classiques (CFD, ...).

L'indicateur peut être employé à l'échelle territoriale pour réaliser un diagnostic d'espaces extérieurs ciblés (par exemple des espaces publics). Il permet à ce titre d'identifier les espaces les plus à même de bénéficier d'une action de rafraîchissement urbain.

Avantageusement, les données analysées pour calculer le potentiel de rafraichissement peuvent comprendre des données supplémentaires : nombre et surface des bâtiments B1 (voir figures 5 et 6), hauteur et type de végétation, climatiseurs, infrastructures souterraines.

Au sens de l'invention, on entend par « paramètres intermédiaires » toute surface accessible aux usagers telles que les sols, les terrasses, les chaussées, les routes, les toitures terrasses, les zones piétonnes, etc.

Un autre aspect de l'invention est de pouvoir quantification l'impact microclimatique engendré par des modifications du site (par des travaux).

Les figures 5 et 6 illustrent le site S avant et après travaux respectivement : un parking situé dans la zone Z a été en effet transformé en parc avec des rangées d'arbres.

L'invention permet de quantifier les effets rafraîchissants obtenus suite à la réalisation de ces travaux en vue d'améliorer sa performance lors de vague de chaleur. Il s'agit d'une méthode d'évaluation de la performance de techniques d'adaptation aux canicules mises en œuvre sur un site.

On va maintenant décrire une méthode conforme à l'invention qui permet de quantifier de tels effets.

Avantageusement, une station météorologique D1, apte à quantifier un impact microclimatique (I) d'une intervention (p. ex. végétalisation, matériaux réfléchissants, création d'ombrage, présence d'eau, ...) sur le site extérieur donné S, de nature à modifier le potentiel de rafraichissement du site, est disposée à un endroit choisi (dans la zone Z du site S) où la différence entre un potentiel de rafraichissement calculé avant l'intervention et un potentiel de rafraichissement calculé après l'intervention simulée par la modélisation, est supérieure ou égale à un seuil donné.

De façon schématique, pour chaque maille mₙ de la zone Z concernée du site S, un premier potentiel de rafraichissement a été calculé selon le procédé conforme à l'invention, ensuite une intervention a été simulée par l'intermédiaire d'un processeur, puis un second potentiel de rafraichissement a été calculé.

Un aspect de l'invention se base sur la différence entre les deux potentiels de rafraichissement. La méthode a été répétée pour différentes interventions afin d'établir la ou les interventions les plus efficaces pour la zone Z.

Par exemple, en comparant la figure 1 avec la figure 2, il est possible d'identifier les endroits susceptibles d'être influencés efficacement par une transformation de l'îlot de chaleur urbain.

Le calcul d'un potentiel de rafraichissement avant et après une intervention a ainsi permis d'évaluer, par une différence, l'endroit le plus propice à subir une intervention efficace et donnant le meilleur rafraichissement possible.

La disposition d'une station météorologique D1 à cet endroit (zone Z dans l'exemple illustré en figures 5 et 6) permet de confirmer la prédiction du calcul du potentiel de rafraichissement qui a été fait.

Sur les figures 5 et 6, on remarque une première station météo D1 qui est placée dans la zone Z et une seconde station météo D2 est placée dans une zone voisine de la zone Z, pour les besoins de la mise en oeuvre de la méthode conforme à l'invention.

Avantageusement, les stations météorologiques D1 et D2 comprennent un thermomètre à bulbe sec et hygromètre sous abri non ventilé, un globe noir, un anémomètre à ultrasons 2D. Les stations météorologiques D1 et D2 peuvent être protégées par une cage métallique avec des dimensions telles que 2m de hauteur et 1m de diamètre. D'autres capteurs météorologiques peuvent être ajoutés en complément et analysés selon la même méthodologie.

La station météorologique D1 ou D2 mesure des données sur au moins trois hauteurs.

Avantageusement à 1,5m, la station D1 (D2 également) mesure la température, l'humidité, la température de globe noir ; à environ 5cm de profondeur et proche du sol, la station D1 (ou D2 également) mesure la température et le flux de chaleur ; à environ 4m, la station D1 (ou D2 également) mesure le vent, la température, l'humidité, la présence de pluie, l'ensoleillement.

Dans un exemple de réalisation de l'invention (non illustré), chaque station peut comporter un globe noir qui est situé à 1,5m et un anémomètre qui est situé à 4m du sol.

Conformément à un mode de mise en oeuvre de l'invention, on peut récupérer l'exposition au soleil de la station météorologique au travers d'un pyranomètre ou par la mesure de la tension d'un panneau solaire photovoltaïque.

Avantageusement, les stations météorologiques D1 et D2 collectent des données à une fréquence choisit entre 1 et 60min.

De façon avantageuse, les stations météorologiques D1 et D2 collectent des données à une fréquence de 2min, de 3min, de 4min, de 5min, de 6min, de 7min, de 8min, de 9min, de 10min, de 11min, de 12min, de 13min, de 14min, de 15min, de 16min, de 17min, de 18min, de 19min, de 20min, de 21min, de 22min, de 23min, de 24min, de 25min, de 26min,

de 27min, de 28min, de 29min, de 30min, de 31min, de 32min, de 33min, de 34min, de 35min, de 36min, de 37min, de 38min, de 39min, de 40min, de 41min, de 42min, de 43min, de 44min, de 45min, de 46min, de 47min, de 48min, de 49min, de 50min, de 51min, de 52min, de 53min, de 54min, de 55min, de 56min, de 57min, de 58min, ou de 59min.

Au sens de l'invention, un endroit choisi (c'est-à-dire une zone Z) est un espace présent dans le site S, l'espace étant délimité spatialement par le champ d'action de l'intervention.

Avantageusement, le seuil donné est défini par au moins une des caractéristiques suivantes :
la plus grande différence entre le potentiel de rafraichissement calculé avant l'intervention et un potentiel de rafraichissement calculé après l'intervention simulée par la modélisation sur une maille élémentaire ;
la quartile maximale de toutes les différences calculées ;
la moyenne de toutes les différences calculées ;
la variance de toutes les différences calculées.

Avantageusement, le seuil donné est défini comme étant 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49% ou 50% des différences les plus importantes.

Avantageusement, une fois l'endroit choisi, la méthode utilise les deux stations météorologiques D1 et D2:
- une station D2 météorologique témoin placée sur un endroit servant de référence, ne subissant aucune intervention,

l'endroit servant de référence est situé à moins d'1 km de l'endroit choisi, et la maille sur laquelle est positionnée la station D2 est choisie de sorte que son potentiel de rafraichissement présente un écart avec le potentiel de rafraichissement de la maille sur laquelle est positionnée la station D1 de maximum 15%,
- une station météorologique D1 placée dans l'endroit choisi, subissant une intervention.

De façon résumée, on peut considérer que la méthode comporte les étapes suivantes :
obtention de données M_{étude, avant} et M_{témoin, avant} par les au moins deux stations avant l'intervention,
obtention de données M_{étude, après} et M_{témoin, après} par les au moins deux stations après l'intervention,
filtration des données traitées,
analyse des données :
récupération de la valeur ΔMₜ, par la formule suivante : [Math 11] ${ΔM}_{t} = {M}_{é tude , t} - {M}_{t é moin , t}$
« t » prenant la valeur « avant » intervention ou « après » intervention,
détermination de l'impact microclimatique (I) de l'intervention du site urbain, par la formule suivante : [Math 12] $I = {ΔM}_{apr è s} - {ΔM}_{avant}$

Et vérification de la robustesse statistique de l'analyse.

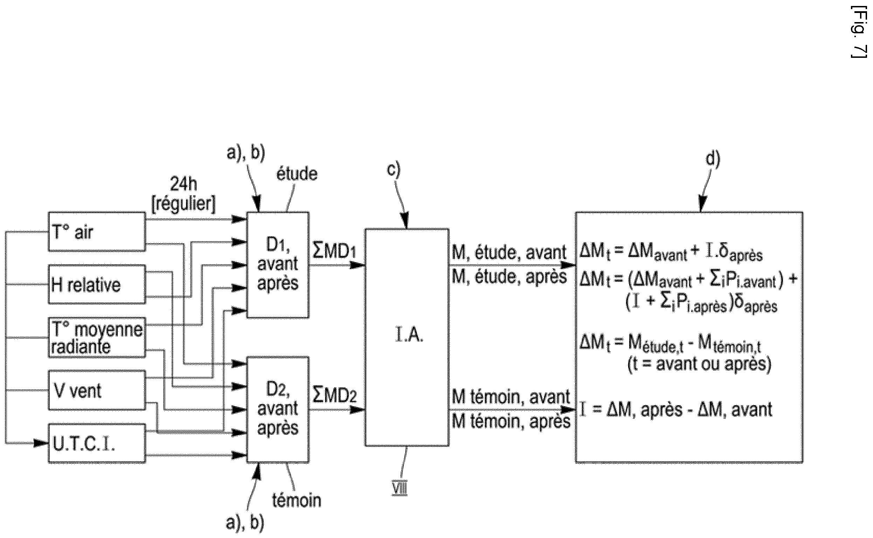

La figure 7 illustre schématiquement ces étapes.

Les éléments M_{étude, après}, et M_{témoin, après}, ΔMₜ et I seront décrits par la suite.

Au sens de l'invention, l'endroit servant de référence (où est positionnée au moins une station météo témoin D2) est un lieu délimité spatialement et ne recevant aucune intervention ou transformation humaine, de sorte à pouvoir apprécier les changements ou les modifications opérés dans l'endroit choisi.

La première station D1 récupère les informations d'un site subissant une intervention visant à modifier le potentiel de rafraichissement des mailles de la zone Z du site S et la seconde station D2 récupère les informations d'une zone du site ne subissant aucune intervention mais dont les paramètres propres au site de référence sont similaires aux paramètres propres initiaux de la zone Z du site subissant l'intervention.

La comparaison des paramètres des deux zones du site S permet d'évaluer l'impact de l'intervention (impact des travaux).

Il devra être compris que la méthode conforme à l'invention pourrait mettre en oeuvre un nombre supérieur à deux stations météorologiques, il y a alors les cas de figures suivants :
cas i) une station météorologique D1 placée dans l'endroit choisi et au moins deux stations météorologiques D2 témoins ;
cas ii) au moins deux stations météorologiques D1 placées dans l'endroit choisi et une station météorologique D2 témoin ;
cas iii) au moins deux stations météorologiques D1 placées dans l'endroit choisi et au moins deux stations météorologiques D2 témoins.

Dans le cas i) (c'est-à-dire « une station météorologique D1 placée dans l'endroit choisi et au moins deux stations météorologiques témoins D1 »), la méthode comprend :
une sous-étape a1) située avant l'étape b) et une sous-étape b1) située avant l'étape c), dans lesquelles les données recueillies par les au moins deux stations météorologiques D1 et D2 témoins sont moyennées ; ou
une étape f) demandant de répéter les étapes a) à e) avec chaque station météorologique témoin, pour obtenir N impact microclimatique correspondant à chaque station météorologique témoin (N correspondant au nombre de station météorologique témoin), et une étape g) faisant la moyenne des N impacts microclimatiques.

Dans le cas ii) (c'est-à-dire « au moins 2 stations météorologiques placées dans l'endroit choisi et 1 station météorologique témoin »), la méthode comprend :
une sous-étape a1) située avant l'étape b) et une sous b1) située avant l'étape c), dans lesquelles les données recueillies par les au moins deux stations météorologiques placées dans l'endroit choisi sont moyennées ; ou
une étape f) demandant de répéter les étapes a) à e) avec chaque station météorologique placée dans l'endroit choisi, pour obtenir N1 impact microclimatique correspondant à chaque station météorologique placée dans l'endroit choisi (N1 correspondant au nombre de station météorologique placée dans l'endroit choisi), et une étape g) faisant la moyenne des N1 impacts microclimatiques.

Dans le cas iii) (c'est à dire « au moins 2 stations météorologiques placées dans l'endroit choisi et au moins 2 stations météorologiques témoins »), la méthode comprend :
une sous-étape a1) située avant l'étape b) et une sous b1) située avant l'étape c), dans lesquelles les données recueillies par les au moins deux stations météorologiques placées dans l'endroit choisi sont moyennées et les données recueillies par les au moins 2 stations météorologiques témoins sont moyennées ; ou
une étape f) demandant de répéter les étapes a) à e) avec chaque station météorologique témoin et avec chaque station météorologique placée dans l'endroit choisi, pour obtenir N x N1 impact microclimatique correspondant à chaque combinaison de station météorologique (N correspondant au nombre de station météorologique témoin et N1 correspondant au nombre de station météorologique placée dans l'endroit choisi), et une étape g) faisant la moyenne des N x N1 impacts microclimatiques.

La moyenne de l'écart entre ΔMₐᵥₐₙₜ et ΔM_{après} donne directement une estimation de la moyenne de l'impact microclimatique I. L'impact peut être calculé sur 24h d'une part, puis à une échelle plus fine, par exemple au pas horaire ou à la fréquence de mesure.

Avantageusement, les données obtenues M_{étude,} t et M_{témoin,} t représentent l'indice universel du climat thermique.

Avantageusement, les données obtenues M_{étude,} t et M_{témoin,} t représentent la température de l'air (T°ₐᵢᵣ) , l'humidité relative (Hᵣₑₗₐₜᵢᵥₑ) , la température moyenne radiante (T°_{moyenne} radiante) et la vitesse du vent (Vᵥₑₙₜ).

Dans le sens de l'invention, la température moyenne radiante (T°_{moyenne radiante}) est un paramètre météorologique qui traduit le bilan radiatif au point mesuré. La température moyenne radiante (T°_{moyenne radiante}) est telle que les échanges radiatifs globaux incidents (irradiance) mesurés de toutes les directions au point de mesure est égal à celui qui serait mesuré au centre d'une sphère dont la paroi serait uniformément à la température moyenne radiante.

Les données obtenues M_{étude,} t et M_{témoin,} t sont des paramètres permettant d'évaluer la chaleur ressentie par un piéton sur un site.

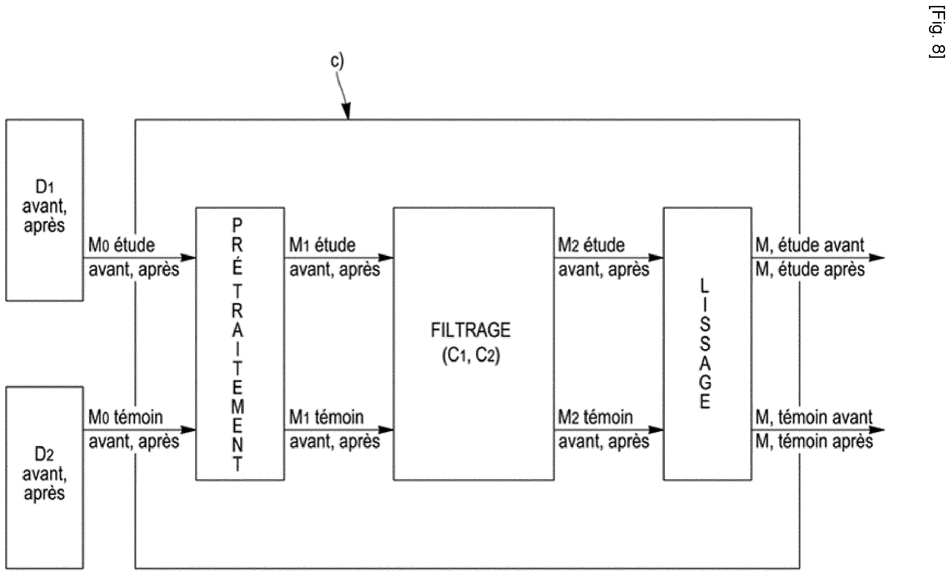

La méthode peut comprendre une étape intermédiaire (« prétraitement » sur la figure 8) qui précède le filtrage de l'étape c), l'étape intermédiaire étant une étape de vérification des jeux de données (M_{0, étude} et M_{0, témoin}, avant et après) visant à combler les éventuels trous de données ou erreurs de mesure.

En effet, les données sont transmises par des capteurs et il peut arriver que les données transmises soient soit erronées ou aberrantes (la donnée transmise prend une valeur d'erreur correspondant à un code d'erreur) soit absente. Sans ajouter de données fictives, les vides et erreurs de mise en forme sont corrigés, quitte à laisser des lignes vides. Par la suite, un lissage des données est réalisé (moyenne glissante sur plusieurs minutes).

Un jeu de données (M_{1, étude} et M_{1, témoin}, avant et après) est alors obtenu après le prétraitement et est soumis au filtrage.

Avantageusement, l'étape c) conserve les données provenant des journées dites radiatives, une journée est dite radiative en remplissant deux conditions : un ciel dégagé et une faible vitesse de vent, les conditions étant définies respectivement par :
une couverture nuageuse inférieure à 3 Octas (condition C1, figure 8 : l'indice universel du climat thermique correspond à la référence UCTI sur la figure 7),
des vitesses de vent inférieures à 4m/s (condition C2, figure 8).

Les conditions peuvent être modifiables par une intelligence artificielle, c'est-à-dire par des méthodes d'apprentissage automatique avec entrainement sur un jeu de données construit manuellement.

La méthode conserve uniquement les données des journées remplissant les deux conditions afin d'évaluer l'impact uniquement sur des journées ayant un fort potentiel de production de chaleur. Ces données sont repérées sur le figure 8 par (M_{2, étude} et M_{2, témoin}, avant et après).

Avantageusement, l'étape c) comprend un lissage des données recueillies (M_{2, étude} et M_{2, témoin}, avant et après) afin d'obtenir les données (M_{étude} avant et après, et M_{témoin,} avant et après) servant à l'étape d).

Avantageusement, l'étape d) analyse par un modèle linéaire à effets mixtes, le modèle combinant :
- l'effet fixe qui modélise l'impact microclimatique de l'intervention et
- des effets aléatoires qui modélisent des paramètres externes.

La combinaison des deux effets permet de se rapprocher le plus fidèlement possible des conditions réelles du site.

Au sens de l'invention, les paramètres externes sont des paramètres susceptibles de faire varier l'impact mesuré dans une moindre mesure.

Avantageusement, les paramètres externes représentent la période de l'été, l'ensoleillement du site urbain, et/ou les interventions non-prévues sur le site.

Dans le sens de l'invention, les interventions sont non prévues quand les interventions ne sont pas programmées dans les travaux initiaux. Il peut s'agir de travaux de réparations d'urgence ou tout autre type d'intervention non planifiée, de type travaux ou autre, de nature à impacter le microclimat du site.

Avantageusement, à l'étape d), les données sont analysées à la fréquence d'acquisition des stations D1 et D2 et sur les données obtenues de la journée en cours.

Au sens de l'invention, la période de l'été est définie par la date d'acquisition des données.

Avantageusement, l'étape d) modélise un modèle linéaire à effet fixe avec δ_{après} l'indicatrice de l'état post-intervention, et utilise cette équation : [Math 13] ${ΔM}_{t} = {ΔM}_{avant} + I . {δ}_{apr è s} ,$ si t=après alors δ_{après}=1, si t=avant alors δ_{après}=0.

Avantageusement, l'étape d) permet d'isoler les paramètres externes P, l'étape d) suit alors cette équation : [Math 14] ${ΔM}_{t} = \left({ΔM}_{avant}+{\sum }_{i} {P}_{i , avant}\right) + \left(I+{\sum }_{i} {P}_{i , apr è s}\right) {δ}_{apr è s}$

« i » est une variable égale aux nombres de paramètres externes.

Avantageusement, à l'étape d) la robustesse statistique de l'impact est vérifiée pour la mesurande étudiée lorsque la valeur de la pente I est estimée avec un risque d'erreur inférieur à 5%.

Avantageusement, l'étape d) fournit la valeur de I et une indication sur la robustesse de son estimation en récupérant la pente de la régression linéaire entre les observations ΔMₐᵥₐₙₜ et ΔM_{après}.

La robustesse statistique de l'impact microclimatique est vérifiée pour le mesurande étudié lorsque la valeur de la pente de l'impact microclimatique I est estimée avec un risque d'erreur inférieur à 5%. La robustesse sur l'impact microclimatique moyen sur 24h est un prérequis à l'étude de la robustesse à échelle temporelle plus fine, par exemple au pas horaire ou à la fréquence de mesure.

Avantageusement, l'étape d) nécessite minimum 10 observations, avantageusement minimum 30 observations.

La méthode d'analyse permet d'obtenir l'impact des différentes données, c'est-à-dire l'impact sur la température de l'air, l'impact sur l'humidité relative, l'impact sur la température moyenne radiante et l'impact sur la vitesse du vent.

Dans un mode de réalisation possible, la méthode inclut (voir figure 8):
un prétraitement des données obtenues avant/après intervention sur les sites (étape c),
un filtrage des données effectué par une intelligence artificielle visant à sélectionner les journées « radiatives » (étape c),
une analyse de ces données par un modèle linéaire à effets mixtes (étape d) dont :
   l'effet fixe modélise l'impact de l'intervention ;
   les effets aléatoires modélisent d'autres paramètres ;
   la robustesse statistique de l'analyse est vérifiée en deux étapes :
   sur les données quotidiennes ;
   sur les données enregistrées à la fréquence d'acquisition des stations ;
   le croisement de ces éléments permet de quantifier les effets avec une estimation de la significativité statistique des résultats.

L'étape c de filtration est réalisée par intelligence artificielle. Plus précisément,

Préalablement aux étapes suivantes, une étape de vérification des jeux de données est possible, visant à combler les éventuels trous de données ou erreurs de mesure, autrement dit cela est un nettoyage de la série de données.

Lorsque la fréquence de mesure est inférieure à 10 minutes, un lissage des données sur cet horizon peut être réalisé.

Une journée d'observation sur 24h est définie à partir du lever du soleil du jour J (par exemple 6h matin en été) jusqu'au lever du soleil à J+1 (5h59 à J+1).

Filtrage des données est réalisé de la façon suivante :
Avantageusement, les données traitées peuvent être collectées lors de journées présentant des conditions dites radiatives, c'est-à-dire avec un ciel clair et de faibles vitesses de vent.

Ces conditions permettent de s'assurer que les contrastes thermiques et que les paramètres météorologiques observés dépendront principalement de l'environnement immédiat de chaque station météorologique et pas de zones situées au-delà des sites étudiés.

Avantageusement, les conditions sont représentatives de canicules et de périodes à fort îlot de chaleur urbain. Comme expliqué ci avant, les critères précis pour retenir une journée d'observation dépendent des spécificités du climat régional et du site précis des au moins deux stations météorologiques :
- vitesse de vent statistiquement faible ; et
- couverture nuageuse inférieure à 3 Octas.

Au sens de l'invention, une couverture nuageuse inférieure à 3 Octas définit un ciel dégagé (condition C1 sur la figure 8).

Avantageusement, la couverture nuageuse doit tenir compte de l'évolution de la trajectoire du soleil au cours de l'année et des spécificités du site.

Les spécificités du site peuvent comprendre la présence de masques solaires, un facteur vue du ciel, etc.

Une journée d'observation de 24h peut être retenue à condition que le seuil de 3 Octas soit respecté 80% ou 70% du temps.

Au sens de l'invention, le seuil de 3 Octas respecté à 80% du temps sur une journée d'observation de 24h, est définit comme étant un seuil idéal ; et le seuil de 3 Octas respecté à 70% du temps sur une journée d'observation de 24h, est définit comme étant un seuil dégradé.

Dans une réalisation possible de la présente invention, si cette condition n'est pas respectée, la série d'observations infra-journalières écoulées depuis le lever du soleil qui respecte en continu les conditions est conservée.

Avantageusement, les critères peuvent être définis par des méthodes d'apprentissage automatique avec un entraînement sur un jeu de données construit manuellement.

Ainsi, la méthode permet d'établir des critères malgré que ces deux critères soient très dépendants des spécificités du site et rendent difficiles l'application de seuils universels.

Avantageusement, le critère de vitesse de vent (condition C2) statistiquement faible est découpé selon deux seuils de vitesse. Les deux seuils de vitesse peuvent être définis comme étant idéal ou dégradé, correspondant au 1er et au 2e décile des vitesses observées sur la période d'étude c'est-à-dire les 10% et 20% les plus faibles.

Dans un mode de réalisation de l'invention, si 80% des vitesses de vent observées sur 24h sont en deçà des seuils ainsi définis, la journée est retenue pour ce critère.

Avantageusement, l'évaluation de la couverture nuageuse est réalisée manuellement à partir d'une observation horaire des conditions de couverture nuageuse au-dessus du site. L'observation est effectuée en vue directe à moins de 10 km du site, à défaut, cela s'évalue à partir de la mesure du rayonnement courte et grande longueur d'onde, respectivement 0,3-3 µm et 3-100 µm à l'aide d'un pyranomètre et d'un pyrgéomètre, représentative du site d'étude, ou une mesure du rayonnement net.

## Revendications

1. Procédé pour calculer un potentiel de rafraichissement d'une maille (m₁, mₙ) élémentaire d'un site géographique extérieur (S), ledit potentiel de rafraichissement visant à quantifier une performance de ladite maille (m₁, mₙ) située dans une zone (Z) soumise à un stress thermique source de formation d'un ilot de chaleur en cas de canicule,
ledit procédé étant **caractérisé en ce qu'**il comprend les étapes suivantes :
- on réalise un modèle numérique d'élévation du site (S),
- on réalise un découpage du site en mailles élémentaires (m₁, mₙ),
**en ce que**, on collecte un premier ensemble d'informations comprenant :
- une information de latitude (φ) du site (S),
- une information d'ensoleillement estival de surface (I_{cumulée}) du site (S), ladite information d'ensoleillement estival de surface (I_{cumulée}) étant une valeur calculée notamment à partir de ladite information de latitude du site (S) et du nombre de jours d'ensoleillement du site (S) sur une période de temps donnée,
- une information de facteur de vue du ciel (SVF), correspondant à un nombre adimensionnel compris entre 0 et 1 qui représente l'exposition d'une surface à la voûte céleste, ladite information de facteur de vue du ciel (SVF) étant obtenue par calcul numérique,
**en ce que** pour chaque maille (m₁, mₙ) on collecte :
- une information d'albédo des surfaces minérales (α) présentes dans ladite maille (m₁, mₙ), ladite information d'albédo (α) correspondant à un coefficient de réflexion du rayonnement solaire par des matériaux identifiés sur lesdites surfaces minérales présentes dans la maille (m₁, mₙ), obtenu par mesure sur site ou en laboratoire,
- un coefficient (QF) représentant des émissions de chaleur anthropiques, ledit coefficient (QF) identifiant les points de rejet de chaleur anthropique dans ladite maille (m₁, mₙ),
**en ce que**, on collecte un deuxième jeu d'informations relatives à la présence de végétation dans la maille (m₁, mₙ), à partir dudit modèle numérique d'élévation réalisé, ledit deuxième jeu d'informations comprenant :
- une première information (δ_{végétation basse}) de présence de végétation, relative à la présence d'une première couche de végétation qui s'étend en dessous d'une hauteur au-dessus d'un sol de ladite maille (m₁, mₙ),
- une deuxième information (δ_{végétation haute}) de présence de végétation, relative à la présence d'une deuxième couche de végétation qui s'étend au-dessus de ladite hauteur du sol de ladite maille (m₁, mₙ),
- une information d'irrigation (δ_{irrigation}), relative à l'irrigation des surfaces naturelles présentes sur ladite maille (m₁, mₙ),
**en ce que** l'on calcule un score de végétation (Score_{végétation}) à partir dudit second jeu d'informations comprenant les première et deuxième informations de présence de végétation et ladite information d'irrigation,
et **en ce que** l'on calcule ledit potentiel de rafraichissement pour ladite maille avec la formule suivante : [Math 15] $Potentiel de rafra î chissement = \frac{\left(\left(1-{Score}_{v é g é tation}\right)+β \left(1-α.SVF\right)\right) . {I}_{cumul é} + {Q}_{F}}{{I}_{incident}}$
I_{incident} étant la densité de flux d'ensoleillement incidente horizontale sans obstacle et étant fourni par calcul numérique pour le site donné,
et où β est une valeur numérique comprise entre 0 et 1 permettant d'établir l'équivalence microclimatique entre la végétation et les matériaux urbains
ledit potentiel de rafraîchissement calculé allant de 0 à 1, 0 caractérisant une maille (m₁, mₙ) offrant une performance de rafraichissement maximale avec des conditions bioclimatiques idéales tandis que 1 caractérise une maille (m₁, mₙ) n'offrant aucune performance de rafraîchissement.

2. Procédé selon la revendication 1, dans lequel ledit score de végétation (Score_{végétation}) est calculé de la façon suivante : [Math 16] $\begin{matrix}{Score}_{v é g é tation} = \left(0,6+0,1. {δ}_{EP}+0,2. {δ}_{irrigation}\right) . {δ}_{v é g é tation haute} . \left(1-{δ}_{v é g é tation basse}\right) \\ + \left(0,2+0,1. {δ}_{EP}+0.2. {δ}_{irrigation}\right) . {δ}_{v é g é tation basse} . \left(1-{δ}_{v é g é tation haute}\right) \\ + \left(0,8+0,1. {δ}_{EP}+0.2. {δ}_{irrigation}\right) . {δ}_{v é g é tation basse} . {δ}_{v é g é tation haute}\end{matrix}$ Où :
δ_{végétation basse} est l'information de présence de végétation, relative à la présence d'une première couche de végétation qui s'étend en dessous d'une hauteur au-dessus d'un sol de ladite maille (m₁, mₙ),
δ_{végétation haute} est l'information de présence de végétation, relative à la présence d'une deuxième couche de végétation qui s'étend au-dessus de ladite hauteur au- dessus du sol de ladite maille (m₁, mₙ),
δ_{irrigation} est l'information d'irrigation, relative à l'irrigation des surfaces naturelles présentes sur la maille (m₁, mₙ),
δ_{végétation basse} étant égale à 1 lorsque le sol est couvert de végétation basse, sinon 0 ;
δ_{végétation haute} étant égale à 1 lorsque le sol est couvert de végétation haute, sinon 0 ;
δ_{EP} étant égale à 1 lorsque la végétation de la maille élémentaire (m₁, mₙ) à un accès à de l'eau pluviale des toitures ou des surfaces environnantes en plus de la pluie standard ; et
δ_{irrigation} étant égale à 1 lorsque la végétation de la maille élémentaire (m₁, mₙ) à un accès continu à l'eau au cours de l'été, soit par de l'irrigation active, soit par un système de réservoir d'eau ou autre conception intégrée permettant d'assurer cet accès continu à l'eau pour les plantes.

3. Procédé selon la revendication 1 ou 2, dans lequel, on collecte un troisième jeu d'informations parmi lesquelles :
- une information de bâtiments (B), prenant en considération le nombre de bâtiments présents sur la zone (Z) du site (S) comprenant ladite maille (m₁, mₙ), ainsi que la surface au sol occupée par ledit nombre de bâtiments, et éventuellement
- une information de climatiseur, indiquant la présence ou l'absence de climatiseurs équipant ledit nombre de bâtiments, et éventuellement,
- une information d'infrastructure souterraine, indiquant la présence ou l'absence d'infrastructures souterraines si ladite infrastructure souterraine est susceptible de dégager de la chaleur à la surface,
et en ce que ledit troisième jeu d'informations indique la puissance thermique QF dégagée.

4. Procédé selon la revendication 1, 2 ou 3, dans lequel ladite information d'ensoleillement estival de surface (I_{cumulée}) et/ou ladite information de la densité de flux d'ensoleillement incidente (I_{incident}), correspond à une valeur d'ensoleillement cumulée du lever du soleil au coucher du soleil sur une journée, ou correspond à une valeur d'ensoleillement moyenne pondérée d'ensoleillement du lever au coucher du soleil qui est calculée à partir de trois journées d'ensoleillement, de préférence ladite ou lesdites journées étant sélectionnées entre le 15 juin et le 15 septembre.

5. Procédé pour délivrer une représentation visuelle d'un site géographique (S), ladite représentation visuelle permettant d'identifier visuellement des zones géographiques (Z) dudit site susceptibles de nécessiter des travaux, ledit procédé pour délivrer une représentation visuelle étant **caractérisé en ce qu'**il comprend les étapes suivantes :
- réalisation d'un modèle dudit site géographique, et découpage dudit modèle en mailles de modèle, chaque maille de modèle correspondant à une représentation de l'une desdites mailles (m₁, mₙ) dudit site géographique (S),
- pour chaque maille (m₁, mₙ), correspondant à chaque maille de modèle, on calcule le potentiel de rafraichissement conformément au procédé selon l'une quelconque des revendications précédentes,
- on associe le potentiel de rafraichissement calculé pour chaque maille (m₁, mₙ) à chaque maille de modèle,
**en ce que** l'on associe, à chaque potentiel de rafraichissement ou à une fourchette de potentiels de rafraichissement une caractéristique de représentation visuelle (A, B, C),
et **en ce que** l'on représente chaque maille de modèle avec ladite caractéristique de représentation visuelle associée au potentiel de rafraichissement ou à une fourchette de potentiels de rafraichissement calculés pour ladite maille (m₁, mₙ), de façon à obtenir une représentation visuelle du site géographique extérieur avec des mailles (m₁, mₙ) de site géographique visuellement identifiées avec la représentation visuelle (A, B, C) attribuée au potentiel de rafraichissement calculé pour chaque maille (m₁, mₙ) de site géographique (S).

6. Méthode pour quantifier un impact microclimatique de travaux sur une zone (Z) d'un site géographique (S) extérieur, ledit site (S) comprenant plusieurs zones géographiques (Z) adjacentes les unes aux autres, les travaux étant de nature à modifier un potentiel de rafraichissement d'une zone géographique (Z) dudit site (S), la méthode étant **caractérisée en ce qu'**elle comprend les étapes suivantes :
- avant réalisation de travaux sur la zone dudit site, on réalise une représentation visuelle du site conformément au procédé selon la revendication 5, pour identifier visuellement au moins un ensemble de mailles (m₁, mₙ) d'une zone (Z) du site (S) associées à un potentiel de rafraîchissement global le plus élevé parmi lesdites mailles (m₁, mₙ) desdites zones du site,
- on positionne une première station météo (D1) d'étude dans ladite zone (Z) identifiée dans le site (S),
- on positionne une deuxième station météo (D2) d'étude dans une deuxième zone dudit site, de préférence ladite station météo (D2) de ladite deuxième zone dudit site étant distante de moins de 1 km de ladite première station météo (D1) de la zone (Z) identifiée, et/ou un potentiel de rafraichissement globale de ladite deuxième zone dudit site ayant tout au plus un écart de valeur de 15% avec un potentiel de rafraichissement global de la zone (Z) dans laquelle est positionnée ladite première station météo (D1),
et **en ce que** ladite méthode comprend les étapes suivantes :
- obtention d'un premier ensemble de données M_{étude, avant} pour la première station météo (D1) et d'un deuxième ensemble de données M_{témoin,} avant pour la deuxième station météo (D2), avant la réalisation des travaux,
- obtention d'un troisième ensemble de données M_{étude, après} pour la première station météo et d'un quatrième ensemble de données M_{témoin,} après pour la deuxième station météo, après la réalisation des travaux,
- calcul d'un cinquième ensemble de données (Δ_{Mavant}) et d'un sixième ensemble de données (Δ_{Maprès}) à partir des premiers, deuxième, troisième et quatrième ensembles de données par la formule suivante : [Math 17] ${ΔM}_{t} = {M}_{é tude , t} - {M}_{t é moin , t}$
« t » prenant la valeur « avant » intervention ou « après » intervention, et,
- quantification de l'impact microclimatique (I) des travaux sur ladite zone du site extérieur donné par la formule suivante : [Math 18] $I = {ΔM}_{apr è s} - {ΔM}_{avant}$

7. Méthode selon la revendication 6, dans laquelle les ensembles de données M_{étude,} avant, M_{témoin,} avant, M_{étude,} après, et M_{témoin, après}, obtenus par les première et deuxième stations météo (D1, D), comprennent la température de l'air, l'humidité relative, la température moyenne radiante, la vitesse du vent et l'indice universel du climat thermique.

8. Méthode selon la revendication 7, dans laquelle les ensembles de données M_{étude,} avant, M_{témoin,} avant, M_{étude,} après, et M_{témoin, après}, obtenus par les première et deuxième stations météo sont collectés à intervalles réguliers, sur une période de 24 heures, et en ce que, si au moins 80% des données de vitesse du vent sont inférieures ou égales à 4 m.s⁻¹, ou de préférence inférieures ou égales à 3 m.s⁻¹, alors l'ensemble des données M_{étude, avant}, M_{témoin, avant}, M_{étude, après}, et M_{témoin, après} sont conservées et enregistrées.

9. Méthode selon la revendication 7 ou selon la revendication 8, dans laquelle les ensembles de données M_{étude, avant}, M_{témoin, avant}, M_{étude, après}, et M_{témoin, après} obtenus par les première et deuxième stations météo (D1, D2) sont collectés à intervalles réguliers, sur une période de 24 heures, et en ce que, si au moins 70% des données de nébulosité sont inférieures ou égales à 3 Octas, alors l'ensemble des données M_{étude, avant}, M_{témoin, avant}, M_{étude, après}, et M_{témoin, après} est conservé et enregistré.

10. Méthode selon l'une quelconque des revendications 7, 8 ou 9, dans laquelle l'ensemble des données est relevé à intervalles réguliers au moins toutes les heures, de préférence au moins toutes les dix minutes, et de préférence encore entre 1 et 10 minutes.

11. Méthode selon l'une quelconque des revendications 6 à 10, dans laquelle on réalise un lissage des données des ensembles de données M_{étude, avant}, M_{témoin, avant}, M_{étude, après}, et M_{témoin, après} collectés en réalisant une moyenne glissante des données brutes.

12. Méthode selon l'une quelconque des revendications 6 à 11, dans laquelle, après obtention des premier, deuxième, troisième et quatrième ensemble de données, on réalise un prétraitement des données, ledit prétraitement comprenant une suppression de données erronées et l'ajout de données supplémentaires dans l'ensemble de données obtenues si l'on constate une donnée manquante.

13. Méthode selon l'une quelconque des revendications 6 à 11, comprenant une étape finale de vérification des données, suivant laquelle on réalise un modèle linéaire à effet fixe avec un indicateur δ*_{après}* de l'état post-intervention, ladite étape finale comprenant le calcul suivant : [Math 19] ${ΔM}_{t} = {ΔM}_{avant} + I . {δ}_{apr è s} ,$ si t=après alors δ*_{après}*=1, si t=avant alors δ*_{après}*=0.

14. Méthode selon la revendication 12, dans laquelle ladite étape finale de vérification des données comprend la réalisation d'un modèle linéaire à effets mixtes, le modèle combinant :
- ledit modèle linéaire à effet fixe, qui modélise l'impact microclimatique de l'intervention et
- des effets aléatoires qui modélisent des paramètres externes (P).

15. Méthode selon la revendication 14, dans laquelle les paramètres externes (P), sont isolés, l'étape finale comprenant le calcul suivant : [Math 20] ${ΔM}_{t} = \left({ΔM}_{avant}+{\sum }_{i} {P}_{i , avant}\right) + \left(I+{\sum }_{i} {P}_{i , apr è s}\right) {δ}_{apr è s}$ « i » étant une variable égale aux nombres de paramètres externes.

## Patentansprüche

1. Verfahren zur Berechnung eines elementaren Kühlpotenzials eines Netzes (m₁, mₙ) eines äußeren geografischen Standorts (S), wobei das Kühlpotenzial darauf abzielt, eine Leistung des Netzes (m₁, mₙ) in einem Bereich (Z) zu quantifizieren, der einer thermischen Belastung ausgesetzt ist, die bei Hitzewellen zur Bildung einer Wärmeinsel führt,
wobei das Verfahren **dadurch gekennzeichnet ist, dass** es folgende Schritte umfasst:
- Erstellen eines digitalen Höhenmodells des Standorts (S),
- Erstellen einer Aufteilung des Standorts in elementare Netze (m₁, mₙ),
durch Erfassen einer ersten Informationsmenge, die Folgendes umfasst:
- eine Breitengradinformation (φ) des Standorts (S),
- eine Information über die sommerliche Oberflächensonneneinstrahlung (Iₖᵤₘᵤₗᵢₑᵣₜ) des Standorts (S), wobei die Information über die sommerliche Oberflächensonneneinstrahlung (Iₖᵤₘᵤₗᵢₑᵣₜ) ein Wert ist, der insbesondere aus der Information über den Breitengrad des Standorts (S) und der Anzahl der Sonnentage des Standorts (S) über einen bestimmten Zeitraum berechnet wird,
- eine Information des Himmelssichtfaktors (SVF), die einer dimensionalen Zahl zwischen 0 und 1 entspricht, die die Exposition einer Oberfläche gegenüber dem Himmelsgewölbe darstellt, wobei die Information des Himmelssichtfaktors (SVF) durch numerische Berechnung erhalten wird,
durch Erfassen für jedes Netz (m₁, mₙ):
- einer Albedo-Information der in dem Netz (m₁, mₙ) vorhandenen mineralischen Oberflächen (α), wobei die Albedo-Information (α) einem Reflexionskoeffizienten der Sonnenstrahlung durch Materialien, die auf den in dem Netz (m₁, mₙ) vorhandenen mineralischen Oberflächen identifiziert sind, entspricht und durch Messung vor Ort oder im Labor erhalten wird,
- eines Koeffizienten (QF), der anthropogene Wärmeemissionen darstellt, wobei der Koeffizient (QF) die anthropogenen Wärmeabgabepunkte in dem Netz (m₁, mₙ) identifiziert,
dadurch, dass ein zweiter Informationssatz in Bezug auf das Vorhandensein von Vegetation im Netz (m₁, mₙ) aus dem erstellten digitalen Höhenmodell erfasst wird, wobei der zweite Informationssatz umfasst:
- eine erste Information (δ_{niedrige Vegetation}) über das Vorhandensein von Vegetation, bezogen auf das Vorhandensein einer ersten Vegetationsschicht, die sich unterhalb einer Höhe über einem Boden des Netzes (m₁, mₙ) erstreckt,
- eine zweite Information (δ_{hohe Vegetation}) über das Vorhandensein von Vegetation, bezogen auf das Vorhandensein einer zweiten Vegetationsschicht, die sich überhalb der Höhe über dem Boden des Netzes (m₁, mₙ) erstreckt,
- eine Bewässerungsinformation (δ_{Bewässerung)}, die sich auf die Bewässerung der natürlichen Oberflächen auf dem Netz (m₁, mₙ) bezieht,
durch Berechnen einer Vegetationspunktzahl (Punktzahl_{Vegetation}) aus dem zweiten Informationssatz, der die ersten und zweiten Informationen über das Vorhandensein von Vegetation und die Bewässerungsinformation umfasst,
und durch Berechnen des Kühlpotenzials für das Netz mit folgender Formel: [Math 15] $Kühlpotenzial = \frac{\left(\left(1-{Punktzahl}_{Vegetation}\right)+β \left(1-α.SVF\right)\right) . {I}_{kummuliert} + {Q}_{F}}{{I}_{einfallend}}$
wobei I_{einfallend} die Dichte des horizontalen einfallenden Sonnenstroms ohne Hindernis ist und durch numerische Berechnung für den gegebenen Standort bereitgestellt wird, und wobei β ein numerischer Wert zwischen 0 und 1 ist, mit dem die mikroklimatische Äquivalenz zwischen Vegetation und städtischen Materialien ermittelt werden kann,
wobei das berechnete Kühlpotenzial zwischen 0 und 1 liegt, wobei 0 ein Netz (m₁, mₙ) charakterisiert, das eine maximale Kühlleistung bei idealen bioklimatischen Bedingungen bietet, während 1 ein Netz (m₁, mₙ) charakterisiert, das keine Kühlleistung bietet.

2. Verfahren nach Anspruch 1, wobei die Punktzahl_{Vegetation} wie folgt berechnet wird: [Math 16] 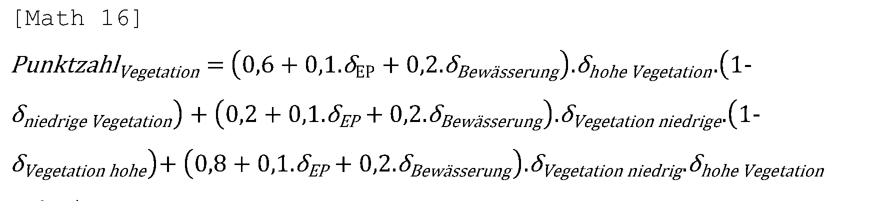 PunktzahlVegetation = (0,6 + 0,1.δEP + 0,2.δBewässerung).δhohe Vegetation.(1-δniedrige Vegetation) + (0,2 + 0,1.δEP + 0,2.δBewässerung).δVegetation niedrige.(1-δVegetation hohe) + (0,8 + 0,1.δEP + 0,2.δBewässerung).δVegetation niedrig.δhohe Vegetation wobei:
δ_{niedrige Vegetation} die Information über das Vorhandensein von Vegetation ist, die sich auf das Vorhandensein einer ersten Vegetationsschicht bezieht, die sich unterhalb einer Höhe über einem Boden des Netzes (m₁, mₙ) erstreckt,
δ_{hohe Vegetation} die Information über das Vorhandensein von Vegetation ist, die sich auf das Vorhandensein einer zweiten Vegetationsschicht bezieht, die sich überhalb der Höhe über dem Boden des Netzes (m₁, mₙ) erstreckt, δ_{Bewässerung} die Bewässerungsinformation ist, die sich auf die Bewässerung der natürlichen Oberflächen des Netzes (m₁, mₙ) bezieht,
δ_{niedrige Vegetation} gleich 1 ist, wenn der Boden mit niedriger Vegetation bedeckt ist, andernfalls 0;
δ_{hohe Vegetation} gleich 1 ist, wenn der Boden mit hoher Vegetation bedeckt ist, andernfalls 0;
δ_{EP} gleich 1 ist, wenn die Vegetation des elementaren Netzes (m₁, mₙ) einen Zugang zu Regenwasser von Dächern oder umliegenden Oberflächen zusätzlich zum Standardregen aufweist; und
δ_{Bewässerung} gleich 1 ist, wenn die Vegetation des elementaren Netzes (m₁, mₙ) im Sommer kontinuierlichen Wasserzugang hat, entweder durch aktive Bewässerung oder durch ein Wassertanksystem oder eine andere integrierte Konstruktion, die diesen kontinuierlichen Wasserzugang für die Pflanzen gewährleistet.

3. Verfahren nach Anspruch 1 oder 2, wobei ein dritter Informationssatz erfasst wird, darunter:
- eine Gebäudeinformation (B), unter Berücksichtigung der Anzahl der Gebäude im Bereich (Z) des Standorts (S), der das Netz (m₁, mₙ) umfasst, sowie der von der Anzahl der Gebäude belegten Bodenfläche, und gegebenenfalls
- eine Klimaanlageninformation, die das Vorhandensein oder Fehlen von Klimaanlagen angibt, die die Anzahl von Gebäuden ausstatten, und gegebenenfalls
- eine Information über die unterirdische Infrastruktur, aus der hervorgeht, ob unterirdische Infrastruktur vorhanden ist oder nicht, sofern diese unterirdische Infrastruktur Wärme an die Oberfläche abgegeben kann, und dadurch, dass der dritte Informationssatz die freigesetzte Wärmeleistung QF angibt.

4. Verfahren nach Anspruch 1, 2 oder 3, wobei die Information über die sommerliche Oberflächensonneneinstrahlung (Iₖᵤₘᵤₗᵢₑᵣₜ) und/oder die Information über die Dichte des einfallenden Sonnenstroms (I_{einfallend}) einem kumulierten Sonneneinstrahlungswert vom Sonnenaufgang bis zum Sonnenuntergang an einem Tag entspricht oder einem gewichteten durchschnittlichen Sonneneinstrahlungswert vom Sonnenaufgang bis zum Sonnenuntergang entspricht, der aus drei Sonnentagen berechnet wird, die vorzugsweise zwischen dem 15. Juni und dem 15. September ausgewählt sind.

5. Verfahren zum Bereitstellen einer visuellen Darstellung eines geografischen Standorts (S), wobei die visuelle Darstellung es ermöglicht, geografische Bereiche (Z) des Standorts, die Arbeiten erfordern könnten, visuell zu identifizieren, wobei das Verfahren zum Bereitstellen einer visuellen Darstellung **dadurch gekennzeichnet ist, dass** es die folgenden Schritte umfasst:
- Erstellen eines Modells des geografischen Standorts und Aufteilen des Modells in Modellnetze, wobei jedes Modellnetz einer Darstellung eines der Netze (m₁, mₙ) des geografischen Standorts (S) entspricht,
- für jedes Netz (m₁, mₙ), das jedem Modellnetz entspricht, Berechnen des Kühlpotenzials gemäß dem Verfahren nach einem der vorhergehenden Ansprüche,
- Zuordnen des berechneten Kühlpotenzials für jedes Netz (m₁, mₙ) zu jedem Modellnetz,
durch Zuordnen, zu jedem Kühlpotenzial oder einer Spanne von Kühlpotenzialen, eines visuellen Darstellungsmerkmals (A, B, C),
und dadurch, dass jedes Modellnetz mit dem Merkmal der visuellen Darstellung dargestellt wird, das dem Kühlpotenzial oder einer Spanne von Kühlpotenzialen, die für das Netz (m₁, mₙ) berechnet werden, zugeordnet wird, um eine visuelle Darstellung des äußeren geografischen Standorts mit Netzen (m₁, mₙ) des geografischen Standorts zu erhalten, die visuell mit der visuellen Darstellung (A, B, C) identifiziert sind, die dem berechneten Kühlpotenzial für jedes Netz (m₁, mₙ) des geografischen Standorts (S) zugeteilt wird.

6. Verfahren zum Quantifizieren einer mikroklimatischen Auswirkung von Arbeiten auf einen Bereich (Z) eines äußeren geografischen Standorts (S), wobei der Standort (S) mehrere aneinander angrenzende geografische Bereiche (Z) umfasst, wobei die Arbeiten darauf abzielen, das Kühlpotenzial eines geografischen Bereichs (Z) des Standorts (S) zu verändern, wobei das Verfahren **dadurch gekennzeichnet ist, dass** es die folgenden Schritte umfasst:
- vor Durchführen von Arbeiten im Bereich des Standorts wird eine visuelle Darstellung des Standorts gemäß dem Verfahren nach Anspruch 5 durchgeführt, um mindestens eine Reihe von Netzen (m₁, mₙ) eines Bereichs (Z) des Standorts (S) visuell zu identifizieren, die mit dem höchsten Gesamtkühlpotenzial unter den Netzen (m₁, mₙ) der Bereiche des Standorts verbunden sind,
- Positionieren einer ersten Wetterstation (D1) zur Untersuchung in dem Bereich (Z), der im Standort (S) identifiziert ist,
- Positionieren einer zweiten Wetterstation (D2) zur Untersuchung in einem zweiten Bereich des Standorts, wobei die Wetterstation (D2) des zweiten Bereichs des Standorts vorzugsweise weniger als 1 km von der ersten Wetterstation (D1) des identifizierten Bereichs (Z) entfernt ist, und/oder ein Gesamtkühlpotenzial des zweiten Bereichs des Standorts höchstens eine Wertabweichung von 15 % mit einem Gesamtkühlpotenzial des Bereichs (Z) aufweist, in dem die erste Wetterstation (D1) positioniert ist,
und dadurch, dass das Verfahren die folgenden Schritte umfasst:
- Erhalten eines ersten Datensatzes M_{Untersuchung, vor} für die erste Wetterstation (D1) und eines zweiten Datensatzes M_{Kontrolle, vor} für die zweite Wetterstation (D2) vor Durchführung der Arbeiten,
- Erhalten eines dritten Datensatzes M_{Untersuchung, nach} für die erste Wetterstation und eines vierten Datensatzes M_{Kontrolle, nach} für die zweite Wetterstation nach Durchführung der Arbeiten,
- Berechnen eines fünften Datensatzes (Δ_{Mvor}) und eines sechsten Datensatzes (Δ_{Mnach}) aus den ersten, zweiten, dritten und vierten Datensätzen nach folgender Formel: [Math 17] ${ΔM}_{t} = {M}_{Untersuchung , t} - {M}_{Kontrolle , t}$
wobei "t" den Wert "vor" dem Eingriff oder "nach" dem Eingriff annimmt, und
- Quantifizieren der mikroklimatischen Auswirkungen (I) der Arbeiten in diesem Bereich des Außengeländes nach folgender Formel: [Math 18] $I = {ΔM}_{nach} - {ΔM}_{vor}$

7. Verfahren nach Anspruch 6, wobei die Datensätze M_{Untersuchung, vor}, M_{Kontrolle, vor}, M_{Untersuchung,} nach und M_{Kontrolle, nach}, die durch die erste und die zweite Wetterstation (D1, D) erhalten werden, die Lufttemperatur, die relative Luftfeuchtigkeit, die durchschnittliche Strahlungstemperatur, die Windgeschwindigkeit und den universellen thermischen Klimaindex umfassen.

8. Verfahren nach Anspruch 7, wobei die Datensätze M Untersuchung, ᵥₒᵣ, M_{Kontrolle, vor}, M_{Untersuchung,} nach und M_{Kontrolle, nach}, die durch die erste und die zweite Wetterstation erhalten werden, in regelmäßigen Abständen über einen Zeitraum von 24 Stunden erfasst werden, und dadurch, dass, wenn mindestens 80 % der Windgeschwindigkeitsdaten kleiner oder gleich 4 m.s⁻¹ oder vorzugsweise kleiner oder gleich 3 m.s⁻¹ sind, dann alle Untersuchungsdaten M_{Untersuchung, vor}, M_{Kontrolle, vor}, M_{Untersuchung, nach} und M_{Kontrolle, nach} aufbewahrt und gespeichert werden.

9. Verfahren nach Anspruch 7 oder nach Anspruch 8, wobei die Datensätze M_{Untersuchung, vor}, M_{Kontrolle, vor}, M_{Untersuchung, nach} und M_{Kontrolle, nach}, die durch die erste und die zweite Wetterstation (D1, D2) erhalten werden, in regelmäßigen Abständen über einen Zeitraum von 24 Stunden gesammelt werden, und dadurch, dass, wenn mindestens 70 % der Trübungsdaten kleiner oder gleich 3 Oktas sind, alle Daten M_{Untersuchung, vor}, M_{Kontrolle, vor}, M_{Untersuchung,} nach und M_{Kontrolle,} nach aufbewahrt und gespeichert werden.

10. Verfahren nach einem der Ansprüche 7, 8 oder 9, wobei der Datensatz in regelmäßigen Abständen mindestens jede Stunde, vorzugsweise mindestens alle zehn Minuten und vorzugsweise noch besser zwischen 1 und 10 Minuten erfasst wird.

11. Verfahren nach einem der Ansprüche 6 bis 10, wobei eine Glättung der Daten der erfassten Datensätze M_{Untersuchung, vor}, M_{Kontrolle, vor}, M_{Untersuchung}, _{nach} und M_{Kontrolle, nach} durch einen gleitenden Durchschnitt der Rohdaten erstellt wird.

12. Verfahren nach einem der Ansprüche 6 bis 11, wobei nach Erhalt des ersten, zweiten, dritten und vierten Datensatzes eine Vorverarbeitung der Daten erstellt wird, wobei die Vorverarbeitung das Löschen fehlerhafter Daten und das Hinzufügen zusätzlicher Daten zum erhaltenen Datensatz umfasst, wenn ein fehlendes Datensatz festgestellt wird.

13. Verfahren nach einem der Ansprüche 6 bis 11, umfassend einen letzten Schritt der Datenüberprüfung, nach dem ein lineares Festeffektmodell mit einem Indikator δ*_{nach}* des Zustands nach dem Eingriff erstellt wird, wobei der letzte Schritt die folgende Berechnung umfasst: [Math 19] $\begin{matrix}{ΔM}_{t} = {ΔM}_{vor} + I . {δ}_{nach} , \\ wenn t = nach dann {δ}_{nach} = 1 , wenn t = vor dann {δ}_{nach} = 0 .\end{matrix}$

14. Verfahren nach Anspruch 12, wobei der letzte Schritt der Datenüberprüfung das Erstellen eines linearen Mischeffektmodells umfasst, wobei das Modell Folgendes kombiniert:
- das lineare Festeffektmodell, das die mikroklimatischen Auswirkungen des Eingriffs modelliert, und
- Zufallseffekte, die externe Parameter (P) modellieren.

15. Verfahren nach Anspruch 14, wobei die externen Parameter (P) isoliert sind, wobei der letzte Schritt folgende Berechnung umfasst: [Math 20] ${ΔM}_{t} = \left({ΔM}_{vor}+{Σ}_{i}{P}_{i , vor}\right) + \left(I+{Σ}_{i}{P}_{i , nach}\right) {δ}_{nach}$ wobei "i" eine Variable ist, die der Anzahl der externen Parameter entspricht.

## Claims

1. A method for calculating a cooling potential of an elementary mesh (m₁, mₙ) of an external geographical site (S), said cooling potential aiming to quantify a performance of said mesh (m₁, mₙ) located in a zone (Z) subjected to a thermal stress source of formation of a heat island in the event of a heat wave,
said method being **characterised in that** it comprises the following steps of:
- making a numerical elevation model of the site (S),
- dividing the site into elementary meshes (m₁, mₙ),
**in that** a first set of information is collected comprising:
- information on the latitude (φ) of the site (S),
- surface summer sunlight information (I_{cumulative}) of the site (S), said surface summer sunlight information (I_{cumulative}) being a value calculated in particular from said latitude information of the site (S) and the number of days of sunlight of the site (S) over a given period of time,
- sky view factor (SVF) information, corresponding to a dimensionless number between 0 and 1 that represents the exposure of a surface to the celestial vault, said sky view factor (SVF) information being obtained by numerical calculation,
**in that** for each mesh (m₁, mₙ) the following is collected:
- albedo information of the mineral surfaces (α) present in said mesh (m₁, mₙ), said albedo information (α) corresponding to a reflection coefficient of the solar radiation by materials identified on said mineral surfaces present in the mesh (m₁, mₙ), obtained by measurement on site or in a laboratory,
- a coefficient (QF) representing anthropic heat emissions, said coefficient (QF) identifying the anthropic heat release points in said mesh (m₁, mₙ),
**in that** a second set of information relating to the presence of vegetation in the mesh (m₁, mₙ) is collected, from said numerical elevation model made, said second set of information comprising:
- first information (δ_{low vegetation}) of the presence of vegetation, relating to the presence of a first layer of vegetation that extends below a height above a soil of said mesh (m₁, mₙ),
- second information (δ_{high vegetation}) of the presence of vegetation, relating to the presence of a second layer of vegetation that extends above said height of the soil of said mesh (m₁, mₙ),
- irrigation information (δ_{irrigation}), relating to the irrigation of the natural surfaces present on said mesh (m₁, mₙ),
**in that** a vegetation score (Score_{vegetation}) is calculated from said second set of information comprising the first and second information of the presence of vegetation and said irrigation information,
and **in that** said cooling potential for said mesh is calculated with the following formula: [Math 15] $Cooling potential = \frac{\left(\left(1-{Score}_{vegetation}\right)+β\left(1-α.SVF\right)\right) . {I}_{cumulative} + {Q}_{F}}{{I}_{incident}}$
I _{incident} being the horizontal incident sunlight flux density without obstacle and being provided by numerical calculation for the given site,
and where β is a numerical value between 0 and 1 allowing establishing the microclimatic equivalence between vegetation and urban materials
said calculated cooling potential ranging from 0 to 1, 0 characterising a mesh (m₁, mₙ) offering maximum cooling performance with ideal bioclimatic conditions whereas 1 characterises a mesh (m₁, mₙ) offering no cooling performance.

2. The method according to claim 1, wherein said vegetation score (Score_{vegetation}) is calculated as follows: [Math 16] 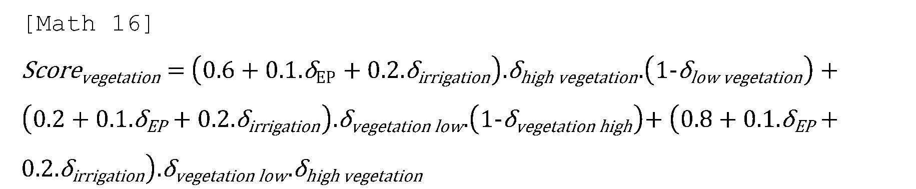 ScoreVegetation = (0.6 + 0.1.δEP + 0.2.δirrigation).δhigh vegetation.(1-δlow vegetation) + (0.2 + 0.1.δEP + 0.2.δirrigation).δvegetation low.(1-δvegetation high)+ (0.8 + 0.1.δEP + 0.2.δirrigation).δvegetation low.δhigh vegetation Where:
δ_{low vegetation} is the information of the presence of vegetation, relating to the presence of a first layer of vegetation that extends below a height above a soil of said mesh (m₁, mₙ),
δ_{high vegetation} is the information of the presence of vegetation, relating to the presence of a second layer of vegetation that extends above said height above the soil of said mesh (m₁, mₙ),
δ_{irrigation} is the irrigation information, relating to the irrigation of the natural surfaces present on the mesh (m₁, mₙ),
δ_{low vegetation} being equal to 1 when the soil is covered by low vegetation, otherwise 0;
δ_{high vegetation} being equal to 1 when the soil is covered by high vegetation, otherwise 0;
δ_{EP} being equal to 1 when the vegetation of the elementary mesh (m₁, mₙ) has access to rainwater from roofs or surrounding surfaces in addition to standard rain; and
δ_{irrigation} being equal to 1 when the vegetation of the elementary mesh (m₁, mₙ) has continuous access to water during the summer, either by active irrigation, or by a water reservoir system or other integrated design making it possible to ensure this continuous access to water for plants.

3. The method according to claim 1 or 2, wherein a third set of information is collected, among which:
- information on buildings (B), taking the number of buildings present in the zone (Z) of the site (S) comprising said mesh (m₁, mₙ), as well as the soil surface occupied by said number of buildings into consideration, and possibly
- air conditioner information, indicating the presence or absence of air conditioners equipping said number of buildings, and possibly,
- underground infrastructure information, indicating the presence or absence of underground infrastructure if said underground infrastructure is likely to release heat to the surface,
and in that said third set of information indicates the thermal power QF released.

4. The method according to claim 1, 2 or 3, wherein said surface summer sunlight information (I_{cumulative}) and/or said incident sunlight flux density information (I_{incident}), corresponds to a cumulative sunlight value from sunrise to sunset over a day, or corresponds to a weighted average sunlight value from sunrise to sunset that is calculated from three sunlight days, preferably said day(s) being selected between June 15th, and September 15th.

5. A method for delivering a visual representation of a geographical site (S), said visual representation making it possible to visually identify geographical zones (Z) of said site likely to require work, said method for delivering a visual representation being **characterised in that** it comprises the following steps of:
- making a model of said geographical site, and dividing said model into model meshes, each model mesh corresponding to a representation of one of said meshes (m₁, mₙ) of said geographical site (S),
- for each mesh (m₁, mₙ), corresponding to each model mesh, calculating the cooling potential in accordance with the method according to any one of the preceding claims,
- associating the cooling potential calculated for each mesh (m₁, mₙ) with each model mesh,
**in that** each cooling potential or a range of cooling potentials is associated with a visual representation characteristic (A, B, C),
and **in that** each model mesh is represented with said visual representation characteristic associated with the cooling potential or with a range of cooling potentials calculated for said mesh (m₁, mₙ), so as to obtain a visual representation of the external geographical site with geographical site meshes (m₁, mn) visually identified with the visual representation (A, B, C) assigned to the cooling potential calculated for each mesh (m₁, mₙ) of the geographical site (S).

6. A method for quantifying a microclimatic impact of works on a zone (Z) of an external geographical site (S), said site (S) comprising several geographical zones (Z) adjacent to one another, the works possibly modifying a cooling potential of a geographical zone (Z) of said site (S), the method being **characterised in that** it comprises the following steps of:
- before carrying out work on the zone of said site, making a visual representation of the site in accordance with the method according to claim 5, to visually identify at least one set of meshes (m₁, mₙ) of a zone (Z) of the site (S) which are associated with the highest overall cooling potential among said meshes (m₁, mₙ) of said zones of the site,
- positioning a first study weather station (D1) in said zone (Z) identified in the site (S),
- positioning a second study weather station (D2) in a second zone of said site, preferably said weather station (D2) of said second zone of said site being less than 1 km away from said first weather station (D1) of the zone (Z) identified, and/or an overall cooling potential of said second zone of said site having a maximum value difference of 15% with an overall cooling potential of the zone (Z) in which said first weather station (D1) is positioned, and **in that** said method comprises the following steps of:
- obtaining a first study data set M_{study}, _{before} for the first weather station (D1) and a second data set M_{control}, _{before} for the second weather station (D2), before carrying out the works,
- obtaining a third data set M_{study, after} for the first weather station and a fourth set of data M_{control}, _{after} for the second weather station, after carrying out the works,
- calculating a fifth data set (Δ_{Mbefore}) and a sixth data set (Δ_{Mafter}) from the first, second, third and fourth data sets by the following formula: [Math 17] ${ΔM}_{t} = {M}_{study , t} - {M}_{control , t}$
"t" taking on the value "before" intervention or "after" intervention, and,
- quantifying the microclimatic impact (I) of the works on said zone of the external site given by the following formula: [Math 18] $I = {ΔM}_{after} - {ΔM}_{before}$

7. The method according to claim 6, wherein the data sets M_{study, before}, M_{control, before}, M_{study}, _{after}, and M_{control, after}, obtained by the first and second weather stations (D1, D), comprise the air temperature, the relative humidity, the mean radiant temperature, the wind speed and the universal thermal climate index.

8. The method according to claim 7, wherein the data sets M_{study, before}, M_{control, before}, M_{study}, _{after}, and M_{control, after}, obtained by the first and second weather stations are collected at regular intervals, over a period of 24 hours, and in that, if at least 80% of the wind speed data are less than or equal to 4 m.s⁻¹, or preferably less than or equal to 3 m.s⁻¹, then all the data M_{study, before}, M_{control, before}, M_{study}, _{after}, and M_{control}, _{after} are retained and recorded.

9. The method according to claim 7 or claim 8, wherein the data sets M_{study, before}, M_{control, before}, M_{study}, _{after}, and M_{control, after} obtained by the first and second weather stations (D1, D2) are collected at regular intervals, over a period of 24 hours, and in that, if at least 70% of the cloudiness data is less than or equal to 3 Octas, then all the data M_{study, before}, M_{control, before}, M_{study}, _{after}, and M_{control}, _{after} are retained and recorded.

10. The method according to any one of claims 7, 8 or 9, wherein all the data are picked up at regular intervals at least every hour, preferably at least every ten minutes, and still preferably between 1 and 10 minutes.

11. The method according to any one of claims 6 to 10, wherein smoothing of the data sets M_{study, before}, M_{control, before}, M_{study}, _{after}, and M_{control, after} collected is carried out by making a moving average of the raw data.

12. The method according to any one of claims 6 to 11, wherein, after obtaining the first, second, third and fourth data sets, pre-processing of the data is carried out, said pre-processing comprising deleting erroneous data and adding additional data to the data set obtained if a missing piece of data is observed.

13. The method according to any one of claims 6 to 11, comprising a final step of verifying the data, according to which a fixed-effect linear model is made with an indicator δ*_{after}* of the post-intervention state, said final step comprising the following calculation: [Math 19] $\begin{matrix}{ΔM}_{t} = {ΔM}_{before} + I . {δ}_{after} , \\ if t = after then {δ}_{after} = 1 , if t = before then {δ}_{after} = 0 .\end{matrix}$

14. The method according to claim 12, wherein said final step of verifying the data comprises making a mixed-effect linear model, the model combining:
- said fixed-effect linear model, which models the microclimatic impact of the intervention and
- random effects that model external parameters (P).

15. The method according to claim 14, wherein the external parameters (P) are isolated, the final step comprising the following calculation: [Math 20] ${ΔM}_{t} = \left({ΔM}_{before}+{Σ}_{i}{P}_{i , front}\right) + \left(I+{Σ}_{i}{P}_{i , after}\right) {δ}_{after}$ "i" being a variable equal to the numbers of external parameters.
